# EUROPEAN PATENT APPLICATION

(11) **EP 3 061 353 A1**
(43) Date of publication of application: **31.08.2016**
(21) Application number: 16156465.3
(22) Date of filing: 27.06.2011
(51) Int. Cl.: A23L 27/20

(54) **FLAVOURING COMPOSITIONS AND METHODS FOR MAKING SAME**

(30) Priority: 25.06.2010 US 823857
(62) Divisional of application: 11799050.7
(71) Applicant: Frito-Lay Trading Company GmbH, 3011 Berne (CH)
(72) Inventor: GEORGE, Eapen, Frisco, TX 75034 (US); GROHNKE, Stefanie, Gesa, 49201 Dissen (DE); HILLMANN, Hedda, 85356 Freising (DE); HOFMANN, Thomas, 85375 Neufahrn (DE); SCHIEBERLE, Peter, 85406 Zolling (DE)
(74) Representative: Jenkins, Peter David

(57) **Abstract**

Methods for synthesizing traditional balsamic vinegar, conventional balsamic vinegar, and Parmesan cheese flavouring compositions are provided for easily synthesizing these flavourings for use in or with food products for flavour addition, enhancement, and/or substitutes for flavourings typically obtained only after long aging methods.

## Description

### BACKGROUND OF THE INVENTION

### Technical Field

The present invention relates to the creation of flavouring compositions. More specifically, the present invention is directed towards methods of manufacturing flavouring compositions as an alternative to traditionally long processes, which are generally geographically confined within small production areas.

### Description of Related Art

The development of flavouring compositions and profiles can require long and detailed manufacturing processes. In particular, the most sought-after and increasingly popular forms of balsamic vinegar and cheese remain confined to production within only certain well-defined geographic areas of the world and continue to be manufactured only with traditionally long processes.

Generally, there are two kinds of balsamic vinegar. Traditional balsamic vinegar (TBV) is a well-known, high-quality food product obtained through alcoholic and acetic fermentation of cooked musts of grapes, without addition of starter cultures or any other additives. After a long aging process of at least 12 years in sets of wooden casks of decreasing size, TBV is exclusively sold in special bottles containing only 100 ml for prices starting at more than $100, with quality and price increasing with age. While conventional balsamic vinegar (BV) is produced industrially (vs. only a few bottles of TBV produced every year), even BV requires inclusion of ingredients that have undergone long periods or manufacture. Conventional BV is manufactured by substituting high amounts of less expensive wine vinegar instead of must and typically contains preserving agents and/or coloring and flavorings. Wine vinegar, which is not permitted in TBV, is produced from wine, which is known to come from processed grapes. As with TBV, the grapes must be carefully picked not only at the right time in their life cycle, but also during the right time of day to ensure the right balance of acids and sugars. They must also be picked gently to avoid bruising and undergo thorough washing processes to clean the grapes and rid them of any pests, leaves, or in some cases, stems. The grapes are then turned into must and fermented for at least 3-4 weeks and aged in barrels or vats with a special bacteria for malolactic fermentation. The aging process can vary anywhere from 9 months to 2 ½ year or more. Better quality wine vinegars are aged in wood for up to two years and exhibit a complex, mellow flavor. Some wines must also go through cold stabilization processes before an aging step. Thus, both TBV and conventional BV are derived from long and detailed processes.

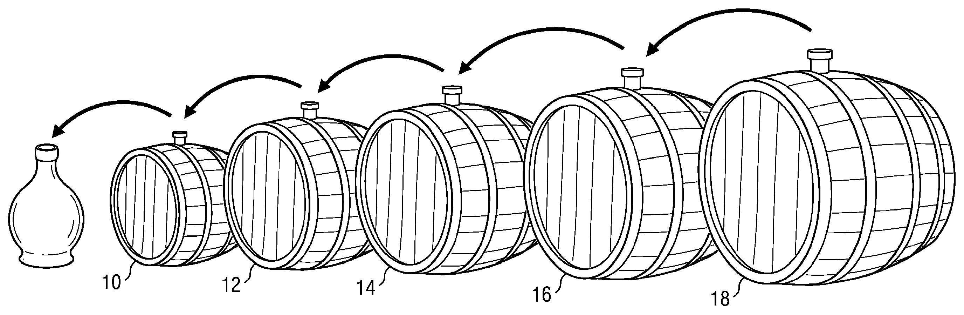

The figure illustrates the prior art procedure called "topping up," which is used to produce TBV. The process is perhaps the most complex and extensive production procedure for any edible product. According to Italian laws, TBV must be produced by acetic acid fermentation of cooked must of Trebbiano, Spergola, Lambrusco or other types of grape local to Modena in Italy and harvested in autumn. The manufacturing process begins by cooking Trebbiano grape juice to reduce the water content of the juice, turning it into a syrup called must with an intensified flavour. Generally, preparation of the must and its concentration is done at atmospheric pressure and about 80-90 °C until about 1/3 of the initial amount is left. The cooked must is then kept in a barrel called the "botte madre" until the following springtime. The fermentation and ripening process is carried out in a series of wooden casks called battery, depicted in the figure. The series usually consists of between 5 to 10 barrels of different sizes or volumes and different woods such as oak, chestnut, cherrywood, ash, mulberry, acacia, or juniper. The degree of evaporation and aroma of the TBV is influenced by the kind of wood used. During aging, the liquid in each cask is kept constant by transferring a certain amount of vinegar from one cask to another in a decreasing progression. In the spring, half of the ripened vinegar is taken out of the first barrel **10** and a sequential decanting procedure is applied wherein each of the subsequent barrels 12, 14, 16 are refilled up to 80% of the volume in order to establish perfect conditions for evaporation and microbial activity. The fifth barrel 18 is finally refilled with must from the "botte madre" (not pictured). In other words, a small proportion is drawn from the smallest cask and each cask is then "topped up" with the contents of the next largest cask. This is done in order to refill the volume loss due to evaporation and decanting. For the production of TBV, the vinegar is taken out of the smallest barrel 10 only after 12 years of ripening.

Like TBV, Parmigiano Reggiano cheese is another popular Italian product that is characterized by a small production area and long maturation processes. This well-known cheese is named after its producing areas near Parma, Reggio Emilia, Modena and Bolognia in Italy. The term Parmesan is used for the cheeses that imitate Parmigiano Reggiano cheese, also referred to as Parmesan-type cheeses. These cheeses differ with regard to raw materials, production and ripening processes.

While most Parmesan-type cheeses are made from pasteurized and clarified skim milk, Parmigiano Reggiano is made from whole raw cow milk. The whole raw milk from an evening milking is kept in stainless steel basins over night whereby natural creaming occurs, separating the cream and developing a light amount of acidity. The following morning, the naturally semi-skinned milk is combined with fresh morning milk resulting in a fat content of about 2.5%, which is important for the correct fat/protein ratio in the cheese. The milk is pumped into copper-lined vats (copper heats and cools quickly). Fermented whey, containing a natural and very complex mixture of thermophile lactic acid bacteria, is then added, and the temperature is raised to about 30 °C. Calf rennet is added to coagulate the milk protein, and the mixture is left to curdle for 10-12 minutes. The curd is then broken up mechanically into small pieces (around the size of rice grains). The temperature is then raised to 55 °C with careful control by the cheese-maker. The curd is left to settle for 45-60 minutes. The compacted curd is collected in a piece of muslin before being divided in two and placed in moulds. Once in the moulds, light pressure is applied for about 12-24 hours to favor the expulsion of whey. The pressed curd is placed in sodium chloride brine at room temperature for 20-25 days to absorb salt. After brining, the ripening process takes place in a cool and ventilated atmosphere (85% relative humidity) referred to as aging rooms for 18 months. This detailed traditional manufacturing process ensures the high quality of the end product for continued world-wide acceptance of the Parmigiano Reggiano cheese.

With continuous changes taking place during manufacturing, the resulting flavour profiles of these food products are extremely complex and highly variable due to factors such as the acidification, grape selection, ripening process, and types of wood, to name a few. Moreover, the developments of these food products require long and extensive aging processes for months and even years. In addition, their development remains confined to certain geographic locations of the world, resulting in lower concentrations, less availability, and high material costs. While previous studies have revealed that these products result in hundreds, perhaps even thousands, of compounds in a characteristic distribution, there remains a need for a more cost-effective alternative to the production of these flavours. There also remains a need for an alternative timesaving means for producing flavouring compositions that closely mimic these foods, wherein long aging periods at specific areas are unnecessary.

### SUMMARY OF THE INVENTION

The present invention provides for flavouring compositions and a quick method of their manufacture. By combining a limited number of compounds characteristic of the flavours within certain ranges, an alternative to the traditionally long aging method is achieved. The methods and formulations described herein allow for rapid production of flavouring compositions without the need for obtaining or growing grapes, and without waiting for any fermentation, ripening, or coagulation steps. Once the necessary compounds are obtained, the flavouring compositions are nearly instantaneous. Thus, the present invention allows for both cost and time efficient methods of producing popular and complex flavouring compositions.

In one embodiment, the flavouring compositions of the present invention comprise both a volatile portion and a non-volatile portion, each comprised of components determined to have the most impact on the flavourings, also known as the aroma-active (volatile) compounds and the taste-active (non-volatile) compounds, respectively. The character impact odorants are combined within amounts disclosed herein to create an aroma (volatile) portion capable of providing sensations otherwise produced only after long periods of fermenting. In another embodiment, combining the aroma portion together with a simulated matrix of the edible product being mimicked results in balsamic vinegar flavourings. In general, the more aroma-active (volatile) components combined in the volatile portion of the invention, as described herein, the fuller, richer and overall more authentic flavouring compositions. Similarly, the more non-volatile, or taste-active, components combined in the non-volatile portion to be added to the volatile portion, the more authentic the flavouring.

The compositions can be modified to provide for any number of improved flavour profiles, which closely mimic those products otherwise formed after long aging processes and which provide for enhanced desirable food additions to a wide variety of options. The flavours of the present invention can be used throughout the entire food industry, for example, for the flavouring or enhanced flavouring of shelf-stable snack food products, bakery products, salad dressing, and pastas. The concentration of such flavors comprises a wide array of levels and ranges, as the intensity will depend on the finished food products as well as personal preferences.

The above and other features and advantages of the present invention will become apparent from the following description. It is to be understood that the invention herein is not to be limited in scope to the cited examples, unless otherwise claimed.

### BRIEF DESCRIPTION OF THE DRAWINGS

The novel features believed characteristic of the invention are set forth in the appended claims. The invention itself, however, as well as a preferred mode of use, further objectives and advantages thereof, will be best understood by reference to the following detailed description of illustrative embodiments when read in conjunction with the accompanying drawings, wherein:
The figure illustrates the prior art traditional aging method of making a food/flavouring composition associated with a flavouring composition of the present invention.

### DETAILED DESCRIPTION

A number of flavouring compositions have been proposed for imitating food products. To date, there remains a need for a method of manufacturing flavouring compositions that are more representative of the characteristic flavours associated with well-known popular products, and therefore, more authentic. The present formulations provide for authentic alternatives for traditional balsamic vinegar (TBV), conventional BV, and Parmesan cheese flavourings. In their traditional state, after months or years of aging steps, these products are made up of extremely complex compositions and hundreds to possibly thousands of compounds, many of which remain unknown despite a number of studies on these natural flavourings. However, the present invention allows for flavouring compositions and nearly instantaneous methods of their preparation to reflect the taste and aroma sensations associated with these products. Despite the presence of hundreds of compounds in the complex, traditionally produced flavourings, the alternative flavourings described herein allow for the combination of only a limited number of compounds found to drive one or more of the sensations typically produced by the flavourings; that is, either or both of the taste and smell that characterize the flavourings. In fact, in one embodiment, a flavourings composition of the present invention can be produced by methods using under 46 compounds. In another embodiment, a flavouring composition can be produced using under 26 compounds. These flavourings can be manufactured in less than one day and thus save enormous amounts of time as compared to the traditional methods of creation, which may take years.

In one embodiment, in a first step to manufacturing a desired flavouring, certain volatile aroma components are combined to produce a volatile portion. In further embodiments, further aroma components may also be added to produce a similar, and in some cases fuller, aroma or flavouring sensation. In a second step, the combined volatile aroma components are combined together with a non-volatile portion comprised of one or more non-volatile compounds. In one embodiment, this non-volatile portion consists of components that simulate the matrix of the food substance to be mimicked. In another embodiment, the non-volatile portion is comprised of up to 39 non-volatile components found to best characterize the taste of the natural flavouring, also referred to as the taste-active components. Thus, the present invention provides for a nearly instantaneous and more cost-effective method and formulation for creating highly popular and authentic flavourings for enhancing food products, while eliminating otherwise costly processes with crucial long periods of wait time for production.

The invention was developed in part by analytical analyses on different balsamic vinegars and a Parmesan cheese performed to avoid overlooking any key compounds that may greatly influence the natural flavourings. In addition, sensory experiments with the flavour compositions of the formulas given together with omission experiments to determine the relative importance of some of the components in the manufactured flavourings. A Flavour Dilution (FD)-chromatogram of the odorants was obtained for the odorants perceived in aroma extracts of conventional BV, TBV and Parmesan cheese. FD-factors reflect the highest dilution at which a substance is still smelled and these are typically determined by Aroma Extract Dilution Analysis (AEDA). AEDA is known as a powerful screening method used for the detection of key aroma compounds, which combines a quantitative gas chromatography olfactometry (GCO) procedure for determining the potency of odorants in food. For the BVs, the FD-factors were found to range from 4 to 4096. In the conventional BV, 60 odor active areas were perceived, while in TBV, 53 odorants were perceived applying AEDA. Yet, balsamic vinegar flavourings of the present invention can be reproduced using as little as 37 volatile aroma components. For the Parmesan cheese extract, FD-factors were found to range from 2 to 8192 in 56 odor active areas. However, by using only 26 volatile aroma compounds, a Parmesan cheese flavouring is manufactured. Preferably, the volatiles are combined with one or more non-volatiles for the production of a more authentic imitation flavouring. Generally, the more non-volatiles as disclosed herein combined within a non-volatile portion of the flavourings herein, the more authentic the flavouring. That is to say, the more non-volatile components added to a non-volatile portion, as disclosed herein, the more difficult it will be to differentiate a flavouring of the present invention from one produced with traditionally long aging methods. In one embodiment, the non-volatile portions is comprised of a group of about 8 sugars and organic acids which simulate a vinegar matrix associated with the volatiles. In another embodiment, the non-volatile portion comprises the compounds that are thought to best characterize the taste of a relevant flavouring, also known as taste active components.

TBVs as used herein are characterized by tobacco-, coconut-, wood- and plum-like odour notes while conventional BVs as used herein are characterized by more fruity, cheese-like and pungent odor notes. As used herein, Parmesan cheese flavourings are those characterized mostly by first, cheese-like flavour notes, followed by pungent, seasoning-like, and fruity odor notes.

The method of creation for the flavouring compositions in a first aspect of the present invention begins by combining certain aroma compounds, thereby producing an aroma-active, or volatile, portion. These aroma compounds have been found by Applicants to best mimic the flavourings otherwise produced by long aging methods. Thus, in a first embodiment, the method of the present invention is comprised of the step of combining one or more of the following compounds from each of the following groups:
Group I:
   ethyl 3-methylbutanoate;
   ethyl 2-methylpropanoate;
   ethyl 2-methylbutanoate;
   ethyl butanoate;
   ethyl phenylacetate;
   ethyl acetate;
Group II:
   ethanol;
   3-methyl-1-butanol;
   2-phenyl ethanol;
   (S)-2-methyl-1-butanol;
Group III:
   2-methylpropanoic acid;
   (S)-2-methylbutanoic acid;
   butanoic acid;
   3-methylbutanoic acid;
   2-phenylacetic acid;
   acetic acid;
   hexanoic acid;
   dodecanoic acid;
Group IV:
   acetaldehyde;
   phenylacetaldehyde;
   4-hydroxy-3-methoxy-benzaldehyde;
   3-methylbutanal;
   2-methylpropanal;
   5-(hydroxymethyl)-furfural;
   furfural;
Group V:
   2-phenylethyl acetate;
   3-hydroxy-2-methyl-4-pyranone;
   γ-nonalactone;
   δ-decalactone;
   cis-whiskey lactone;
   2-ethyl-3,5-dimethylpyrazine;
   γ-dodecalactone;
      h) 2,3-butandione;
      (E)-β-damasceone;
      j) wine lactone;
      k) 3-hydroxy-4,5-dimethyl-2(5H)-furanone;
      l) 4-ethylphenol; and
      m) 4-methylphenol.
   wherein the weight ratio of the added one or more compounds from group I, one or more compounds from group II, one or more compounds from group III, one or more compounds from group IV, and one or more compounds from group V in the mixture should be about 0.05-50:2-600:100-4000:2-600:0.01-10. This mixture provides for the creation of a volatile portion in a first step of the method described herein. In another embodiment, two or more compounds from each group are added together within the above ratios. In another embodiment, three or more compounds from each group are added together within the above ratios. In another embodiment, four or more compounds from each group are added together within the above ratios. In another embodiment, all compounds are added together while remaining within the above ratios. Generally, the more compounds added in the volatile portion, the more similar the resulting flavouring is to one produced with traditional methods. In one embodiment, the volatile portion consists of only the above aroma compounds. One skilled in the art, armed with this disclosure, can produce any number of suitable formulations with flavour and aromatic profiles similar to a formulation traditionally produced.

By way of example, the combination of a plurality of the following aroma compounds in the approximate ranges of Table 1 have been found by Applicants to result in a volatile portion or composition that best imitates balsamic vinegars. When all are present in the volatile portion as described herein, each volatile should make up the approximate percentage of the volatile portion as shown below. However, it should be noted that not all of the components are necessary for the creation of a balsamic vinegar flavouring as described herein. All values should be considered approximations, which may vary by as much as about 5% or even about 10% in some embodiments, while still producing acceptable embodiments of balsamic vinegar flavourings.

**Table 1. Suitable ranges for the creation of balsamic vinegar flavourings of the present invention**

| **Compound** | **Concentration (mg/kg)** | **Percentage(%)** |
|---|---|---|
| ethyl 3-methylbutanoate | 0.0047-0.122 | ≤0.0002 |
| ethyl 2-methylpropanoate | 0.0031-0.185 | ≤0.0003 |
| ethyl 2-methylbutanoate | 0.00041-0.0187 | ≤0.00003 |
| ethyl phenylacetate | 0.0282-0.0303 | 0.0001 |
| ethyl acetate | 18-530 | 0.05-0.88 |
| Ethanol | 818-7950 | 2.4-13.2 |
| 3-methyl-1-butanol | 0.0342-66 | 0.001-0.1 |
| 2-phenylethanol | 11.1-21.40 | 0.03-0.04 |
| 4-ethylphenol | 0.134-0.291 | 0.0004 |
| 4-methylphenol | 0.00615-0.0397 | ≤0.0001 |
| 2-methylpropanoic acid | 5.27-9.87 | 0.016 |
| (S)-2-methylbutanoic acid | 1.34-1.95 | 0.003-0.004 |
| butanoic acid | 2.07-4.14 | 0.006-0.007 |
| 3-methylbutanoic acid | 8.62-16.3 | 0.02-0.03 |
| 2-phenylacetic acid | 1.4-10.9 | 0.002-0.02 |
| acetic acid | 32600-51500 | 85.6-97.4 |
| acetaldehyde | 0.955-7.6 | 0.002-0.01 |
| phenylacetaldehyde | 0.0276-0.0864 | <0.0001 |
| 4-hydroxy-3-methoxybenzaldehyde | 0.0901-1.05 | 0.0002-0.002 |
| 3-methylbutanal | 0.0871-0.185 | 0.0002-0.0003 |
| 2-methylpropanal | 0.0476-0.0828 | 0.0001 |
| 2,3-butandione | 7.26-14.5 | 0.02 |
| (E)-B-damascenone | 0.00055-0.00431 | ≤0.00001 |
| wine lactone | 0.00158-0.0078 | ≤0.00001 |
| 3-hydroxy-4,5-dimethyl-2(5H)-furanone | 0.0413-0.389 | 0.0001-0.0006 |

Varying amounts of the above concentrations allows for the production of either a conventional balsamic vinegar flavouring or a traditional balsamic vinegar flavouring, as further discussed below. It should be noted that varying any amount provided by 10% on either side of the lower or upper range limits disclosed above will also provide further suitable embodiments or balsamic vinegar flavourings. In still further embodiments, the concentrations may vary by as little as 5%.A number of possibilities and embodiments are possible given the above table. Thus, one skilled in the art, when armed with this disclosure, would be able to determine suitable variances within these disclosed factors for all provided compounds.

Table 2 below indicates a general comparison of the suitable ranges for the components in common to both a TBV and a conventional BV, which when used in the approximate amounts provided below better imitate either a TBV or a BV.

**Table 2. Comparison of approximate suitable ranges of components in common to the manufactured BVs described herein.**

| **Compound** | **TBV Concentration (mg/kg)** | **BV Concentration (mg/kg)** |
|---|---|---|
| ethyl 3-methylbutanoate | 0.0047-0.005 | 0.108-0.122 |
| ethyl 2-methylpropanoate | 0.0031-0.0039 | 0.178-0.185 |
| ethyl 2-methylbutanoate | 0.00041-0.00055 | 0.0127-0.0187 |
| ethyl butanoate | 0 | 0.0551-0.0772 |
| ethyl phenylacetate | 0.0269-0.0303 | 0.0282-0.0283 |
| ethyl acetate | 18-19.5 | 509-530 |
| ethanol | 818-860 | 7220-7950 |
| 3-methyl-1-butanol | 0.342-0.380 | 62.6-66 |
| 2-phenylethanol | 11.1-13.1 | 21.2-21.4 |
| 4-ethylphenol | 0.134-0.152 | 0.234-0.291 |
| 4-methylphenol | 0.0298-0.0397 | 0.00615-0.00701 |
| 2-methylpropanoic acid | 5.4-5.27 | 8.67-9.87 |
| (S)-2-methylbutanoic acid | 1.42-1.95 | 1.34-1.47 |
| butanoic acid | 2.07-2.34 | 3.94-4.14 |
| 3-methylbutanoic acid | 12.0-16.3 | 8.62-9.45 |
| 2-phenylacetic acid | 10.2-10.9 | 1.4-1.49 |
| acetic acid | 32600-33700 | 50000-51500 |
| acetaldehyde | 0.955-1.81 | 7.1-7.6 |
| phenylacetaldehyde | 0.0276-0.0288 | 0.0676-0.0864 |
| 4-hydroxy-3-methoxybenzaldehyde | 1.05 | 0.0901-0.0937 |
| 3-methylbutanal | 0.0871-0.0893 | 0.182-0.185 |
| 2-methylpropanal | 0.0617-0.0828 | 0.0476-0.054 |
| 2,3-butandione | 13.5-14.5 | 7.26-9.46 |
| (E)-β-damascenone | 0.00055-.00114 | 0.00431-0.00478 |
| wine lactone | 0.0055-0.0078 | 0.00158-0.00176 |
| 3-hydroxy-4,5-dimethyl-2(5H)-furanone | 0.387-0.389 | 0.0413-0.0418 |

The above amounts are approximate and may vary somewhat while still producing acceptable embodiments. All compounds disclosed herein are either readily available from any number of manufacturers, or can be synthesized by any method known in the art. The compounds may be in either liquid or solid form. Once all compounds are obtained and/or synthesized, the volatile portion and flavourings of the present invention can be manufactured in less than one day. Generally, to create this portion of the flavouring described herein, one or more compounds are mixed in an aqueous system. For example, during test runs, the compounds were dissolved in water in a glass flask and stirred with a magnetic stirrer for a few minutes until a clear aqueous liquid. It should be noted that the word clear is not mean to depict a colorless mix. One skilled in the art would recognize that other methods and equipment may also be used to mix together the volatile portion of the present invention.

As previously mentioned, by varying the amounts of the above compounds within the range and ratio disclosed, embodiments can be directed towards either a TBV flavouring or a BV flavouring. For example, one or more of the ethyl esters of Group I at higher ratios of about 8 to about 50 would characterize the flavouring compositions as more of a conventional balsamic vinegar, while lower ratios of between about 0.05 to about 8 result in a more traditional balsamic vinegar flavouring. Likewise, when contents of the group II alcohols are increased to about 130 in the ratio of the mixture, a conventional BV flavouring is obtained. The same is true for most of the aldehydes such as acetaldehyde and 3-methylbutanal of group V; however, surprisingly, higher amounts of 2-methylpropanal of about 0.0617-0.0828 mg/kg create an improved TBV flavouring, though in nature long periods of aging should promote evaporation of this aldehyde. By way of further example, for a TBV flavouring, higher amounts of wine lactone and 3-hydroxy-4,5-dimethyl-2(5H)-furanone, as disclosed in Table 2, better reflect a traditional balsamic vinegar. In addition, for a conventional BV of the present invention, small amounts of ethyl butanoate as disclosed above are also added for a more desirable flavouring.

With further regard to the combining of the above-mentioned aroma volatile components, the volatile portion, in one embodiment, is comprised of the following components: ethyl acetate, ethanol, acetic acid, 5-(hydroxymethyl)-furfural, and 2,3-butandione. In one embodiment, these components comprise between about 98% to about 99.9% of said volatile portion. In another embodiment, these components comprise about 99.7% of the volatile portion.

In one embodiment, the formulation of the volatile portion comprises between about 29790 mg/kg to about 36410 mg/kg acetic acid in the manufacturing of a TBV flavouring. In other TBV flavouring embodiments, the volatile portion comprises one or more of: about 0.0044 to about 0.0054 mg/kg ethyl 3-methylbutanoate, about 0.0031 to about 0.0039 mg/kg ethyl 2-methylpropanoate, about 0.00041 to about 0.00055 mg/kg ethyl 2-methylbutanoate, about 0.025 to about 0.031 mg/kg ethyl phenylacetate, and between about 16.8 to about 20.9 mg/kg ethyl acetate. Preferably, in embodiments mimicking a TBV flavouring, no amounts of ethyl butanoate are added. Further embodiments may comprise two or more of these ethyl esters in the indicated approximate amounts. Further embodiments comprise three or more of these ethyl esters in the approximate amounts indicated. Still further embodiments may comprise four or more of the ethyl esters as grouped in Group I above. In one embodiment, five ethyl ester compounds of Group I are added in one formulation. In another embodiment, all 6 ethyl esters of Group I are combined within the volatile portion of the present invention. Thus, suitable embodiments of the volatile portion of the present invention comprise at least one but up to 6 of the ethyl esters of Group I. Addition of these components within the provided ranges has been found to result in a synthesized TBV flavouring.

In other embodiments in the production of a TBV, the volatile portion comprises one or more of the following components: between about 755 to about 922.9 mg/kg ethanol, between about 0.321 mg/kg to about 0.392 mg/kg 3-methyl-1-butanol, between about 10.89 to about 13.31 mg/kg 2-phenylethanol, and between about 0.071 to about 0.087 mg/kg (S)-2-methyl-1-butanol. Further embodiments of the volatile portion may comprise two or more of the alcohols of the above Group II. In one embodiment, the volatile portion comprises three of the alcohols within the disclosed approximate ranges of the alcohols. In another embodiment, the volatile portion comprises all four of the alcohols in the approximate disclosed range. Thus, suitable embodiments comprise at least one but up to four of the alcohols of Group II.

In further embodiments for manufacturing the TBV flavourings, the volatile portion comprises one or more of: between about 4.81 to about 5.87 mg/kg 2-methylpropanoic acid, between about 1.4 to about 1.95 mg/kg (S)-2-methylbutanoic acid, between about 1.98 to about 2.42 mg/kg butanoic acid, between about 12 to about 16.3 mg/kg 3-methylbutanoic acid, between about 9.5 to about 11.7 mg/kg 2-phenylacetic acid, between about 0.8442 to about 1.032 hexanoic acid, and between about 0.08 mg/kg to about 0.98 mg/kg dodecanoic acid. Further embodiments may comprise two or more of these acids of Group III. Other embodiments of the volatile portion of the present invention comprise three or more of these acids. Other embodiments comprise four or more of these acids. In other embodiments, the volatile portion comprises five or more the acids. In further embodiments, the volatile portion comprises six or more of the acids of the above Group III. In one embodiment, the volatile portion comprises 7 of these acids. In another embodiment, the volatile portion comprises all 8 of these acids of the above Group III. Thus, suitable embodiments of the volatile portion in a first step of the method of the present invention comprise at least one but up to 8 of the acids of the above Group III.

In other embodiments a manufactured TBV flavouring of the present invention, comprises one or more of the following aldehyde components: between about 0.95 to about 1.81 mg/kg acetaldehyde, about 0.025 to about 0.031 mg/kg phenylacetaldehyde, between about 9.54 mg/kg to about 1.16 mg/kg 4-hydroxy-3-methoxybenzaldehyde, between about 0.079 to about 0.097 mg/kg 3-methylbutanal, between about 0.06 mg/kg and about 0.08 mg/kg 2-methylpropanal, between about 4370 mg/kg to about 5350 mg/kg of 5-(hydroxymethyl)-furfural, and between about 32.22 to about 39.38 mg/kg of furfural. Further embodiments may comprise two or more of these aldehydes. In other embodiments, the volatile portion comprises three or more of these aldehydes. Further still, four or more of the aldehyde components of Group IV may be mixed within the volatile portion. In other embodiments, five or more of the aldehyde components are mixed within the volatile portion. In one embodiment, six of the components of Group IV are included in the volatile portion. In another embodiment, all seven of the components of Group IV are added within the volatile portion. Thus, suitable embodiments of the TBV flavouring comprise a volatile portion having at least one but up to seven of the components of the disclosed Group IV.

In further embodiments of the TBV flavouring, the volatile portion comprises one or more of: between about 0.747 to about 0.913 mg/kg 2-phenylethyl acetate, between bout 1.098 mg/kg and 1.342 mg/kg 3-hydroxy-2-methyl-4-pyranone, about 0.0187 to about 0.0230 mg/kg γ-nonalactone, about 0.196 to about 0.0271 mg/kg δ-decalactone, about 0.0143 to about 0.0182 mg/kg cis-whiskey lactone, about 0.00121 to about 0.00149 mg/kg 2-ethyl-3,5-dimethylpyrazine, about 0.0008 to about 0.001 mg/kg γ-dodecalactone, between about 12.6 to about 15.5 mg/kg 2,3-butandione, 0.00055 to about 0.00114 mg/kg (E)-P-damascenone, about 0.0055 to about 0.0078 mg/kg wine lactone, between about 0.349 mg/kg to about 0.427 mg/kg 3-hydroxy-4,5-dimethyl-2(5H)-furanone, about 0.129 to about 0.158 mg/kg 4-ethylphenol, and about 0.03 to about 0.04 mg/kg 4-methylphenol. Further embodiments of the volatile portion of a TBV flavouring comprise two or more of the components of the above Group V. In further embodiments, the volatile portion comprises three or more of the Group V components. In further embodiments, the volatile portion comprises four or more of the Group V components. Other embodiments comprise five or more of the components of the above Group V in the volatile portion. Additional embodiments comprise at least six of the components of the above Group V. In some embodiments, the volatile portion comprises at least seven of these components. In some embodiments, the volatile portion comprises at least eight of these components. In other embodiments, the volatile portion comprises at least nine of these components. In other embodiments, the volatile portion comprises at least ten of these components. In other embodiments, the volatile portion comprises at least eleven of these components. In other embodiments, the volatile portion comprises at least twelve of these components. In one embodiment, the volatile portion may comprise all thirteen of the components listed in the above Group V. Thus, in suitable embodiments, a balsamic vinegar of the present invention may comprise at least one but up to 13 of the components of Group V. Finally, in the most authentic version of a balsamic vinegar flavouring described herein, one embodiment comprises all compounds from all of the above listed Groups I through V.

Optionally, in still further embodiments for the volatile portion of a TBV flavouring, a flavouring of the present invention may also comprise any number of the following additional components: 1-octen-3-one, 2-isopropyl-3-methoxypyrazine, 2,3-diethyl-5-methylpyrazine, 2-isobutyl-3-methoxypyrazine, propanoic acid, 3-methylbutanoic acid, 3-methyl-2,4-nonandione, trans-4,5-epoxy-(E)-2-decenal, 4-hydroxy-2,5-dimethyl-3(2H)-furanone, δ-nonalactone, γ-decalactone, z-6-dodecen-γ-lactone, 3-phenylpropanoic acid, trans-whiskey lactone, 2-methoxyphenol, 2-hydroxy-3-methyl-2-cyclopenten-1-one, and 4-ethyl phenylacetate. One skilled in the art, having read this disclosure, can adjust the amounts of any of these optional components as desired.

For embodiments representative of a conventional BV, the volatile portion comprises between about 45450 mg/kg to about 55550 mg/kg acetic acid. In one embodiment, the volatile portion of a conventional BV of the present invention further comprises one or more of the following components: between about 0.1026 mg/kg to about 0.1254 mg/kg ethyl 3-methylbutanoate, between about 0.1638 mg/kg to about 0.2002 mg/kg ethyl 2-methylpropanoate, about 0.0127 mg/kg to about 0.0187 mg/kg ethyl 2-methylbutanoate, between about 0.0551 mg/kg to about 0.0772 mg/kg ethyl butanoate, about 0.0254 mg/kg to about 0.0310 mg/kg ethyl phenylacetate, and between about 468 mg/kg to about 572 mg/kg ethyl acetate. Further embodiments may comprise two or more of these ethyl esters in the indicated approximate amounts. Further embodiments comprise three or more of these ethyl esters in the approximate amounts indicated. Still further embodiments may comprise four or more of the ethyl esters as grouped in Group I above. In one embodiment, five ethyl ester compounds of Group I are added in one formulation. In another embodiment, all 6 ethyl esters of Group I are combined within the volatile portion of the present invention. Thus, suitable embodiments of the volatile portion of the present invention comprise at least one but up to 6 of the ethyl esters of Group I. Addition of these components within the provided ranges has been found to result in a synthetic yet authentic conventional BV flavouring.

In other embodiments in the production of a conventional BV, the volatile portion comprises one or more of the following components: between about 6831 mg/kg to about 8349 mg/kg ethanol, between about 58.23 mg/kg to about 71.17 mg/kg 3-methyl-1-butanol, between about 19.17 mg/kg to about 23.43 mg/kg 2-phenylethanol, and between about 15.57 mg/kg to about 19.03 mg/kg (S)-2-methyl-1-butanol. Further embodiments of the volatile portion may comprise two or more of the alcohols of the above Group II. In one embodiment, the volatile portion comprises three of the alcohols within the disclosed approximate ranges of the alcohols. In another embodiment, the volatile portion comprises all four of the alcohols in the approximate disclosed range. Thus, suitable embodiments of a conventional BV also comprise at least one but up to four of the alcohols of Group II.

In other embodiments in the production of a conventional BV, the volatile portion comprises one or more of the following components: between about 8.34 mg/kg to about 10.2 mg/kg 2-methylpropanoic acid, between about 1.26 mg/kg to about 1.55 mg/kg (S)-2-methylbutanoic acid, between about 3.61 mg/kg to about 4.42 mg/kg butanoic acid, between about 8.22 mg/kg to about 10.04 mg/kg 3-methylbutanoic acid, between about 1.29 mg/kg to about 1.58 mg/kg 2-phenylacetic acid, between about 1.62 mg/kg to about 1.99 mg/kg hexanoic acid, and between about .0.0505 mg/kg to about 0.0687 mg/kg dodecanoic acid. Further embodiments may comprise two or more of the acids of Group III. Other embodiments of the volatile portion of the present invention comprise three or more of these acids. Other embodiments comprise four or more of these acids. In other embodiments, the volatile portion comprises five or more the acids of Group III. In further embodiments, the volatile portion comprises six or more of the acids of the above Group III. In one embodiment, the volatile portion comprises 7 of these acids. In another embodiment, the volatile portion comprises all 8 of these acids of the above Group III. Thus, suitable embodiments of the volatile portion in a first step of the method of the present invention comprise at least one but up to 8 of the acids of the above Group III.

In some embodiments a manufactured conventional BV flavouring of the present invention, comprises one or more of the following aldehyde components: between about 6.56 mg/kg to about 8.02 mg/kg acetaldehyde, between about 0.0676 to about 0.0864 mg/kg phenylacetaldehyde, between about 0.0827 mg/kg to about 0.1011 mg/kg 4-hydroxy-3-methoxybenzaldehyde, between about 0.1656 to about 0.2024 mg/kg 3-methylbutanal, between about 0.0456 mg/kg to about 0.0558 mg/kg 2-methylpropanal, between about 1341 mg/kg to about 1639 mg/kg 5-(hydroxymethyl)-furfural, and between about 1.773 to about 2.167 mg/kg furfural. Further embodiments may comprise two or more of these aldehydes. In other embodiments, the volatile portion comprises three or more of these aldehydes. Further still, four or more of the aldehyde components of Group IV may be mixed within the volatile portion. In other embodiments, five or more of the aldehyde components are mixed within the volatile portion. In one embodiment, six of the components of Group IV are included in the volatile portion. In another embodiment, all seven of the components of Group IV are added within the volatile portion. Thus, suitable embodiments of the conventional BV flavouring comprise a volatile portion having at least one but up to seven of the components of the disclosed Group IV.

In further embodiments of the conventional BV flavouring, the volatile portion comprises one or more of: between about1.062 mg/kg to about 1.298 mg/kg 2-phenyethyl acetate, between about 0.121 mg/kg to about 0.147 mg/kg 3-hydroxy-2-methyl-4-pyranone, 0.0196 mg/kg to about 0.0243 mg/kg, γ-nonalactone, about 0.0095 mg/kg to about 0.0116 mg/kg δ-decalactone, about 0.00623 mg/kg to about 0.00836 mg/kg cis-whiskey lactone, about 0.000272 mg/kg to about 0.000669 mg/kg 2-ethyl-3,5-dimethylpyrazine, about 0.000369 mg/kg to about 0.000504 mg/kg γ-dodecalactone, between about 7.26 mg/kg to about 9.46 mg/kg 2,3-butandione, about 0.0041 mg/kg to about 0.005 mg/kg (E)- β-damascenone, about 0.0015 mg/kg to about 0.0018 mg/kg wine lactone, between about 0.0374 mg/kg to about 0.0458 mg/kg 3-hydroxy-4,5-dimethyl-2(5H)-furanone, between about 0.234 mg/kg to about 0.298 mg/kg 4-ethylphenol, and about 0.00598 mg/kg to about 0.00732 mg/kg 4-methylphenol. Further embodiments of the volatile portion of a conventional BV flavouring comprise two or more of the components of the above Group V. In further embodiments, the volatile portion comprises three or more of the Group V components. In further embodiments, the volatile portion comprises four or more of the Group V components. Other embodiments comprise five or more of the components of the above Group V in the volatile portion. Additional embodiments comprise at least six of the components of the above Group V. In some embodiments, the volatile portion comprises at least seven of these components. In some embodiments, the volatile portion comprises at least eight of these components. In other embodiments, the volatile portion comprises at least nine of these components. In other embodiments, the volatile portion comprises at least ten of these components. In other embodiments, the volatile portion comprises at least eleven of these components. In other embodiments, the volatile portion comprises at least twelve of these components. In one embodiment, the volatile portion may comprise all thirteen of the components listed in the above Group V. Thus, in suitable embodiments, a balsamic vinegar of the present invention may comprise at least one but up to 13 of the components of Group V. Finally, in the most authentic version of a balsamic vinegar flavouring described herein, one embodiment comprises all compounds from all of the above listed Groups I through V.

In additional embodiments directed to further conventional BV embodiments, the volatile portion may further optionally comprises one or more of the following compounds 2-methyl-1-propanol, 1-octen-3-one, 2-acetyl-1-pyrroline, dimethyl trisulphide, nonanal, 2,3,5-trimethylpyrazine, 2-isopropyl-3-methoxypyrazine, 2-ethyl-3,6-dimethylpyrazine, 2,3-diethyl-5-methylpyrazine, 2-(sec-butyl)-3-methoxypyrazine, propanoic acid, 2-acetylpyrazine, 3-methyl-2,4-nonandione, 4-ethyl phenylacetate, 2-hydroxy-3-methyl-2-cyclopenten-1-one, 2-methoxyphenol, 3-hydroxy-2-methyl-4-pyranone, trans-4,5-epoxy-(E)-2-decenal, δ-nonalactone, γ-decalactone, z-6-dodecen-γ-lactone, and 3-phenylpropanoic acid. One skilled in the art, having read this disclosure, can adjust the amounts of any of these optional components as desired.

While the flavour profiles of both conventional and traditional balsamic vinegars, as traditionally produced, are extremely complex and contain hundreds of compounds, the compositions of the present invention in a first embodiment are capable of imparting an extremely similar flavour sensation, which may be characterized as authentic, using a volatile portion having as little as 37 compounds to produce a TBV flavouring or as little as 38 compounds in a volatile portion capable of producing a conventional BV disclosed herein. Incorporation of fewer compounds also provides for acceptable embodiments characteristic of balsamic vinegar flavour.

The invention is further illustrated by the following examples, in which the amounts and percentages should be considered merely approximations.

### Example 1. Sample formulation for the aroma portion of a conventional balsamic vinegar

The following aroma volatile substances were mixed in an aqueous system at room temperatures and ambient pressures to produce a flavoring composition reminiscent of a high quality aged balsamic vinegar, or TBV. During test runs, ethanolic solution of each of the below compounds at the approximate indicated amounts were prepared. Aliquots of each stock solution were added to an aqueous matrix. All major sugars and organic acids were added in order to simulate the vinegar matrix, as further described below with relation to Table 5.

**Table 3. Sample Traditional Balsamic Vinegar Aroma Formulation**

| **Compound** | **Conc (mg/kg)** | **Percentage (%)** |
|---|---|---|
| 2,3-butandione | 14.1 | 0.04 |
| 3-hydroxy-4,5-dimethyl-2(5H)-furanone | 0.388 | <0.001 |
| acetic acid | 33100 | 85 |
| wine lactone | 0.0066 | <0.0001 |
| ethyl 3-methylbutanoate | 0.0049 | <0.0001 |
| 3-methylbutanal | 0.0882 | 0.0002 |
| 2-methylpropanal | 0.0749 | 0.0002 |
| 2-phenylethanol | 12.1 | 0.03 |
| (E)-β-damascenone | 0.00081 | <0.00001 |
| Acetaldehyde | 1.42 | 0.004 |
| ethyl 2-methylpropanoate | 0.0034 | <0.00001 |
| ethyl 2-methylbutanoate | 0.00047 | <0.00001 |
| 3-methylbutanoic acid | 13.9 | 0.04 |
| 4-hydroxy-3-methoxybenzaldehyde | 1.05 | 0.003 |
| 4-ethylphenol | 0.144 | 0.0004 |
| 4-methylphenol | 0.0364 | <0.00001 |
| Phenylacetaldehyde | 0.0282 | <0.00001 |
| ethyl phenylacetate | 0.0286 | <0.00001 |
| 2-phenylacetic acid | 10.6 | 0.03 |
| 3-methyl-1-butanol | 0.357 | <0.001 |
| Ethanol | 839 | 2.1 |
| (S)-2-methylbutanoic acid | 1.63 | 0.004 |
| ethyl acetate | 18.7 | 0.05 |
| 2-methylpropanoic acid | 5.34 | 0.01 |
| butanoic acid | 2.2 | 0.006 |
| 2-ethyl-3,5-dimethylpyrazine | 0.00135 | <0.00001 |
| 2-phenylethyl acetate | 0.83 | 0.002 |
| γ-nonalactone | 0.0209 | <0.00001 |
| cis-whiskey lactone | 0.0162 | <0.00001 |
| γ-dodecalactone | 0.00089 | |
| 3-hydroxy-2-methyl-4-pyranone | 1.22 | <0.00001 |
| Hexanoic acid | 0.938 | 0.002 |
| Dodecanoic acid | 0.0892 | 0.0002 |
| (S)-2-methyl-1-butanol | 0.0789 | 0.0002 |
| δ-decalactone | 0.0234 | <0.00001 |
| Furfural | 35.8 | <0.1 |
| 5-(hydroxymethyl)-furfural | 4860 | 12.5 |

### Example 2. Sample formulation for the aroma portion of a conventional balsamic vinegar

The following substances were mixed in an aqueous system at room temperatures and ambient pressures for manufacturing a conventional balsamic vinegar flavouring. During test runs, ethanolic solution of each of the below compounds at the approximate indicated amounts were prepared. Aliquots of each stock solution were added to an aqueous matrix. All major sugars and organic acids were added in order to simulate the vinegar matrix, as further described below with relation to Table 5.

**Table 4. Sample Conventional Balsamic Vinegar Aroma Formulation**

| **Compound** | **Conc (mg/kg)** | **Percentage (%)** |
|---|---|---|
| 2,3-butandione | 8.36 | 0.01 |
| ethyl 3-methylbutanoate | 0.114 | 0.0001 |
| ethyl 2-methylpropanoate | 0.182 | 0.0003 |
| ethyl 2-methylbutanoate | 0.0158 | 0.00003 |
| acetic acid | 50500 | 83.8 |
| 3-methylbutanal | 0.184 | 0.0003 |
| (E)-β-damascenone | 0.004.4 | 0.00001 |
| 3-methyl-1-butanol | 64.7 | 0.1 |
| acetaldehyde | 7.29 | 0.01 |
| 2-phenylethanol | 21.3 | 0.03 |
| 2-methylpropanal | 0.0507 | <0.0001 |
| ethyl butanoate | 0.0647 | 0.0001 |
| 3-hydroxy-4,5-dimethyl-2(5H)-furanone | 0.0416 | <0.0001 |
| wine lactone | 0.00166 | <0.00001 |
| ethyl acetate | 520 | <0.9 |
| 4-ethylphenol | 0.271 | 0.0004 |
| 3-methylbutanoic acid | 9.13 | <0.02 |
| phenylacetaldehyde | 0.0756 | 0.0001 |
| ethanol | 7590000 | 12.6 |
| ethyl phenylacetate | 0.0282 | <0.0001 |
| butanoic acid | 4.02 | 0.007 |
| 4-hydroxy-3-methoxybenzaldehyde | 0.0919 | <0.0002 |
| 4-methylphenol | 0.00665 | 0.00001 |
| 2-methylpropanoic acid | 9.27 | 0.02 |
| 2-phenylacetic acid | 1.44 | 0.002 |
| (S)-2-methylbutanoic acid | 1.41 | 0.002 |
| (S)-2-methyl-1-butanol | 17.3 | 0.03 |
| 2-phenylethyl acetate | 1.18 | <0.002 |
| γ-nonalactone | 0.0219 | <0.00004 |
| 2-ethyl-3,5-dimethylpyrazine | 0.000458 | <0.000001 |
| Cis-whiskey lactone | 0.0073 | 0.00001 |
| γ-dodecalactone | 0.000411 | <0.000001 |
| Hexanoic acid | 1.81 | 0.003 |
| 3-hydroxy-2-methyl-4-pyranone | 0.134 | 0.0002 |
| Dodecanoic acid | 0.0606 | 0.0001 |
| δ-decalactone | 0.0105 | 0.00002 |
| Furfural | 1.97 | 0.003 |
| 5-(hydroxymethyl)-furfural | 1490 | 2.5 |

Having prepared a desired aroma combination, the method of the present invention continues by combining the aroma portion, in a first embodiment, with a composition simulating a food matrix of the desired flavouring or in a second embodiment, with a composition containing non-volatile substances characteristic of the taste of the desired flavouring. It should be understood, however, that the exact order of creation of these portions and/or a matrix is not critical and the order of preparation is irrelevant so long as the compositions are thereafter combined together.

Consequently, either simultaneous with, subsequent to, or prior to the preparation of the desired aroma portion, a vinegar matrix is simulated. For example, it is known that by adding the major sugars and organic acids of a balsamic vinegar to water, a suitable aqueous matrix is created for the balsamic vinegars; namely, glucose, fructose and glycerin are combined with tartaric acid, citric acid, malic acid, glycolic acid and lactic acid. All these components are readily and commercially available, either in powder or liquid form.

In an embodiment directed towards a conventional balsamic vinegar, the simulated matrix is comprised of about 45% to about 46% glucose, about 50% fructose, about 1.9% to about 2% glycerin, about 0.5% to about 0.6% tartaric acid, about 0.1% to about 0.2% citric acid, about 1% malic acid, about 0.1% to about 0.2% glycolic acid, and about 0.4% lactic acid. In another embodiment providing for a TBV flavouring, the simulated matrix comprises about 50% glucose, about 44% fructose, about 1.8% to about 2% glycerin, about 0.8% to about 1% tartaric acid, about 0.3% citric acid, about 2% malic acid, about 0.3% glycolic acid, and about 1% lactic acid. These compounds are added to water at these approximate percentages and mixed together by stirring. In addition, sucrose may be used as a substitute for any of the above sugars.

During test runs, for example, the following compositions of Table 5 below were combined. Approximate variations of these amounts are also suitable and well within the scope of the present invention.

**Table 5. Approximate quantities for the creation of a suitable matrix**

| **Compound** | **Concentration [g/l] for BV** | **Concentration [g/l] for TBV** |
|---|---|---|
| glucose | 115.73 | 327.33 |
| fructose | 126.93 | 288.20 |
| glycerin | 5.07 | 12.37 |
| tartaric acid | 1.53 | 4.72 |
| citric acid | 0.37 | 2.29 |
| malic acid | 2.49 | 14.39 |
| glycolic acid | 0.37 | 1.82 |
| lactic acid | 0.92 | 0.66 |

In another embodiment, either simultaneous with, subsequent to, or prior to the preparation of the aroma portion of the desired vinegar, a nonvolatile portion comprising the components found by Applicants to be most characteristic to the taste of the desired vinegar is created to further characterize and refine the taste of a balsamic vinegar. Again, it should be understood that the order of preparation for combination is not critical so long as the aroma volatile portion is combined with the taste-active non-volatile portion. For example, the sugars, polyols, mineral cations, acid anions, organic acids, amino acids, phenolic acids and/or ellagitannins disclosed herein found to be characteristic of the taste and flavour associated with balsamic vinegar taste are combined in one embodiment. A number of combinations of these non-volatiles produce a suitable non-volatile portion of the present invention. As with the volatile portion, the more non-volatiles included in the non-volatile portion, the more authentic the flavouring embodiment, it being difficult to discern from a traditionally produced flavouring. Notwithstanding further additions in further embodiments, discussed below, the present invention presents an improved method of creating flavouring compositions due to the limited number of compounds necessary to imitate the flavourings and the quick and consistent formulations achieved.

In one embodiment, one or more components from each of the following groups are added to create the non-volatile portion described herein:
Group I:
   glucose;
   fructose;
   glycerol;
   inositol;
   erythritol;
   xylitol;
   arabitol;
   sorbitol;
   ribitol;
   mannitol;
   sucrose;
Group II:
   tartaric aid;
   citric acid;
   malic acid;
   glycolic acid;
   lactic acid;
   acetic acid;
   succinic acid;
Group III:
   chloride;
   oxalate;
   phosphate;
   sodium;
   potassium;
   magnesium;
   calcium;
Group IV:
   catalagin;
   vescalagin;
Group V:
   p-hydroxybenzoic acid;
   protocatechuic acid;
   trans-p-coumaric acid;
   vanillic acid ethylester;
   vanillic acid;
   trans-caffeic acid;
   gallic acid methylester;
   ferulic acid;
   syringic acid;
   vanilline;
   syringaldehyde;
   quinic acid;
   gallic acid;
   wherein the weight ratio of each of the one or more compounds selected from each groups is about 5-800:1-200:0.1-20:1-100:0.5-100. In further embodiments, at least two components are selected from each of the above groups for combination. Other embodiments comprise both components from group IV and at least three components of each of the above remaining groups. Further embodiments comprise both components from group IV and at least four components from each of the remaining groups. Further embodiments comprise both components from group IV and at least five components from each of the remaining groups. Further embodiments comprise both components from group IV and at least six components from each of the remaining groups. Further embodiments comprise both components from group IV and at least seven components from each of the remaining groups. Generally, the more components added, the more authentic the flavouring, it being difficult to distinguish from one produced using traditional methods. In one embodiment, the non-volatile portion consists only of those non-volatile components listed above. One skilled in the art, armed with this disclosure, can determine how to vary these components within the provided ratio to create a balsamic vinegar flavouring of the present invention. The following embodiments provide additional suitable embodiments of the non-volatile portion of the present invention.

In one embodiment in manufacturing a TBV, the non-volatile portion is comprised of one or more of: between about 294588 mg/kg to about 360100 mg/kg glucose, between about 259370 mg/kg to about 317010 mg/kg fructose, and/or between about 11133 mg/kg and about 13610 mg/kg glycerol. These sugars and/or polyols provide for a sweet taste characteristic to TBV. Thus, it should be noted that sucrose or any other similar sugar may be used as a substitute for any of these sugars. In another embodiment, one or more of the following organic acids are added provide a sour taste to the TBV flavouring: between about 4248 mg/kg to about 5192 mg/kg tartaric acid, between about 12950 mg/kg to about 15829 mg/kg malic acid, between about 1638 mg/kg to about 2002 mg/kg glycolic acid, between about 30069 mg/kg to about 36751 mg/kg acetic acid, between about 31.68 mg/kg to about 38.72 mg/kg castalagin and/or between about 42.48 mg/kg to about 51.92 mg/kg vescalagin.

In addition, in further embodiments of a TBV flavouring as described herein, any combination of the following cations and anions may be added: between about 189 mg/kg to about 231 mg/kg chloride, about 1791 mg/kg to about 2189 mg/kg oxalate, between 1044 mg/kg to about 1276 mg/kg phosphate, about 1989 mg/kg to about 2431 mg/kg potassium, about 423 mg/kg to about 517 mg/kg magnesium, about 153 mg/kg to about 187 mg/kg sodium, and/or about 864 mg/kg to about 1056 mg/kg calcium. Chloride, sodium, and/or phosphate additions will provide for additional salty taste components in the flavouring, while oxalate provides an additional sour taste component. Potassium additions provide for an additional salty/astringent taste, while magnesium and/or calcium add further astringent/bitter tastes. In a further embodiment, about 261 mg/kg to about 319 mg/kg succinic acid is added for more sour taste. In a further embodiment for more sour taste, about 2061 mg/kg to about 2519 mg/kg citric acid is added. These amounts are approximate and may vary somewhat while remaining within the scope of the present invention.

In conventional BV flavouring embodiment, the non-volatile portion comprises between about 104157 mg/kg to about 127305 mg/kg glucose, between about 114237 mg/kg to about 139625 mg/kg fructose, and/or between about 4563 mg/kg to about 5577 mg/kg glycerol, for providing a sweet taste to the conventional BV. In another embodiment, one or more of the following organic acids are added to provide a sour taste associated with conventional BV: between about 1377 mg/kg to about 1685 mg/kg tartaric acid, between about 2240 mg/kg to about 2740 mg/kg malic acid, between about 330 mg/kg to about 410 mg/kg glycolic acid, and/or between about 49770 mg/kg to about 60830 mg/kg acetic acid may be added. In addition, in further embodiments, any combination of the following cations and anions may be added to mimic the flavour of a conventional BV: about 117 mg/kg to about 145 mg/kg chloride, between about 1555 mg/kg to about 1905 mg/kg oxalate, between about 630 mg/kg to about 770 mg/kg phosphate, about 2690 mg/kg to about 2992 mg/kg potassium, about 170 mg/kg to about 209 mg/kg magnesium, about 288 mg/kg to about 352 mg/kg sodium, and/or about 350 mg/kg to about 430 mg/kg calcium. As with TBV embodiments, chloride, sodium, and/or phosphate additions will provide for additional salty taste components in a synthetic conventional BV flavouring, while oxalate provides an additional sour taste component. Potassium additions provide for an additional salty/astringent taste, while magnesium and/or calcium add further astringent/bitter tastes. In a further embodiment, 333 mg/kg to about 410 mg/kg citric acid may be added for a sour taste. These amounts are approximate and may vary somewhat while remaining within the scope of the present invention.

By way of example, the following table illustrates the amounts of non-volatile components which were added during test runs in the present invention to create respective non-volatile portions for combination with a corresponding aroma volatile portion. These amounts are approximate and may vary somewhat while remaining within the scope of the present invention. One skilled in the art, armed with this disclosure, would recognize that a wide variety of imitation balsamic vinegar flavourings can be produced using approximate amounts of these components as disclosed. One embodiment of the non-volatile portion of the present invention comprises at least all of the following components of Table 6 in the approximate amounts indicated, depending upon whether one intends to create a TBV flavouring or a conventional BV flavouring.

**Table 6. Non-volatile components for combination in further embodiments mimicking balsamic vinegars**

| **Non-volatile component** | **TBV (mg/kg)** | **Conventional BV (mg/kg)** |
|---|---|---|
| Glucose | 327320 | 115730 |
| Fructose | 288190 | 126930 |
| Glycerol | 12370 | 5070 |
| Tartaric acid | 4720 | 1530 |
| Malic acid | 14390 | 2490 |
| Glycolic acid | 1820 | 370 |
| Acetic acid | 33410 | 5530 |
| Chloride | 210 | 130 |
| Oxalate | 1990 | 1730 |
| Phosphate | 1160 | 700 |
| Potassium | 2210 | 2720 |
| Magnesium | 470 | 190 |
| Calcium | 960 | 390 |
| Castalagin | 35.2 | 0 |
| Vescalagin | 47.2 | 0 |

In addition to one or more of the compounds of Table 6, in further embodiments of the flavourings described herein are possible. In one embodiment in manufacturing a TBV, the non-volatile portion is further comprised of one or more of the following polyols for an additional sweet taste: between about 870 mg/kg to about 1070 mg/kg inositol, between about 729 mg/kg to about 891 mg/kg erythritol, between 243 mg/kg to about 297 mg/kg xylitol, between about 297 mg/kg to about 363 mg/kg arabitol, between about 1728 mg/kg to about 2112 mg/kg sorbitol, between about 189 mg/kg to about 231 mg/kg ribitol, and/or between about 468 mg/kg to about 572 mg/kg mannitol. In addition, in other embodiments, one or more of the following phenolic acids may be added for generally astringent tastes in rounding out the flavouring: between about 2.097 mg/kg to about 2.563 mg/kg p-hydroxybenzoic acid, between about 1.332 mg/kg to about 1.628 mg/kg protocatechuic acid, between about 5.148 mg/kg to about 6.292 mg/kg trans-p-coumaric acid, between about 3.06 mg/kg to about 3.74 mg/kg vanillic acid, between about 4.671 mg/kg to about 5.709 mg/kg trans-caffeic acid, between about 0.549 mg/kg to about 0.671 mg/kg gallic acid-methylester, between about 0.414 mg/kg to about 0.506 mg/kg ferulic acid, between about 5.382 mg/kg to about 6.578 mg/kg syringic acid, between about 0.51 mg/kg to about 0.63 mg/kg gallic acid ethyl ester, between about 5.29 mg/kg to about 6.47 mg/kg gentisic acid, about 0.98 mg/kg to about 1.2 mg/kg vanilline, between about 1.42 mg/kg to about 1.74 mg/kg syringaldehyde between about 2.65 mg/kg to about 3.25 mg/kg quinic acid, and/or about 4.88 mg/kg to about 5.98 mg/kg gallic acid.

In another embodiment for manufacturing a conventional BV flavouring, in addition to one or more of the compounds of Table 6, the non-volatile portion is further comprised of one or more of the following sweet tastes: about 207 mg/kg to about 253 mg/kg inositol, about 180 mg/kg to about 220 mg/kg erythritol, about 45 mg/kg to about 55 mg/kg xylitol, about 81 mg/kg to about 99 mg/kg arabitol, about 81 mg/kg to about 99 mg/kg sorbitol, about 63 mg/kg to about 77 mg/kg ribitol, and/or between about 378 mg/kg to about 462 mg/kg mannitol. In addition, in another embodiment, one or more of the following phenolic acids may be added for generally astringent tastes: between about 2.16 mg/kg to about 2.64 mg/kg p-hydroxybenzoic acid, between about 0.73 mg/kg to about 0.9 mg/kg protocatechuic acid, between about 5.9 mg/kg to about 7.26 mg/kg trans-p-coumaric acid, about 0.027 mg/kg to about 0.033 mg/kg vanillic acid ethylester, between about 2.53 mg/kg to about 3.1 mg/kg vanillic acid, between about 6.06 mg/kg to about 7.41 mg/kg trans-caffeic acid, 0.54 to about 0.66 mg/kg gallic acid-methylester, between about 0.51 mg/kg to about 0.63 mg/kg ferulic acid, between about 4.01 mg/kg to about 4.91 mg/kg syringic acid, between about 8 mg/kg to about 9.78 mg/kg gallic acid ethyl ester, between about 4.04 mg/kg to about 4.94 mg/kg gentisic acid, about 0.6 mg/kg to about 0.74 mg/kg vanilline, between about 0.75 mg/kg to about 0.92 mg/kg syringaldehyde, between about 1.7 mg/kg to about 2.08 mg/kg quinic acid, and/or between about 4.9 mg/kg to about 6.08 mg/kg gallic acid.

By way of example and without limiting the scope herein, table 7, below, indicates the additional non-volatile components which may be added to the non-volatile portion of the present invention. These may be combined with one or more of the components of Table 6 in further embodiments. Generally, the greater the number of non-volatiles added, the more authentic the flavouring. Thus, addition of all the components creates an embodiment having the most authentic flavour, however, omission of one or more compounds may result in significantly similar embodiments. Thus, one skilled in the art, armed with this disclosure, can envision multiple embodiments are plausible in the creation of imitation balsamic vinegar flavovurings while remaining within the scope of the present invention. All amounts are approximate and may vary somewhat while remaining within the scope of the present invention.

**Table 7. Further non-volatile components of the present invention**

| **Non-volatile component** | **TBV (mg/kg)** | **Conventional BV (mg/kg)** |
|---|---|---|
| Inositol | 970 | 230 |
| Erythritol | 810 | 200 |
| Xylitol | 270 | 50 |
| Arabitol | 330 | 90 |
| Sorbitol | 1920 | 90 |
| Ribitol | 210 | 70 |
| Mannitol | 520 | 420 |
| p-Hydroxybenzoic acid | 2.33 | 2.40 |
| Protocatechuic acid | 1.48 | 0.82 |
| Trans-p-Coumaric acid | 5.72 | 6.60 |
| Vanillic acid ethyl ester | 0 | 0.03 |
| Vanillic acid | 3.4 | 2.82 |
| Trans-Caffeic acid | 5.19 | 6.74 |
| Gallic acid-methylester | 0.61 | 0.60 |
| Ferulic acid | 0.46 | 0.57 |
| Syringic acid | 5.98 | 4.46 |
| Gallic acid ethyl ester | 0.57 | 8.89 |
| Gentisic acid | 5.88 | 4.49 |
| Vanilline | 1.09 | 0.67 |
| Syringaldehyde | 1.58 | 0.84 |
| Quinic acid(mg/L) | 2.95 | 1.89 |
| Gallic acid(mg/L) | 5.43 | 5.53 |

Having prepared a volatile portion or mixture and a non-volatile portion or mixture in one embodiment, the non-volatile portion may then be combined with the aroma volatile portion to create a flavouring composition having the flavour sensations characteristic of the traditionally prepared foods. Optionally, following the combination of the aroma portion with either a simulated matrix or the non-volatile portion as described herein, the prepared flavouring composition may further be combined with suitable carriers for addition to food products. In one embodiment of a method for making a balsamic vinegar, the above compounds are combined with one or more liquid flavour carriers such as vegetable oil, medium chain triglycerides, propylene glycol, ethanol, and/or glycerin to create a desired balsamic vinegar flavouring for addition to foods. Liquid carriers such as vegetable oil and/or medium chain triglyceride are suitable to use for a topical spray onto snack foods including, without limitation, potato chips, crackers, wafers, pretzels, or vegetables.

In another embodiment, the above compounds (either with or without the addition of liquid flavor carriers) can be incorporated with dry materials such as salt, sugar, polysaccharides, proteins, maltodextrin, anti-caking agents, and/or acidulants through methods such as spray drying, plating, and/or mixing to create a dry flavouring. The dry flavouring is then suitable to be applied onto snack foods such as potato chips. In further embodiments, further compounds may be added to the above compositions to further differentiate the vinegar flavorings.

In another aspect of the present invention, a Parmesan cheese flavouring is manufactured, which also closely mimics the flavouring achieved via the traditional method of making Parmesan cheese. As with the BV formulations, a number of embodiments are possible given the information disclosed herein. Similar to the above-described method for creation of a balsamic vinegar, in a first step, certain aroma (volatile) substances are combined to make up a volatile portion capable of producing a Parmesan cheese flavouring. In one embodiment, one or more of an aroma component from each of the following groups are combined to produce a volatile portion:
Group I:
   acetic acid;
   butanoic acid;
   decanoic acid;
   hexanoic acid;
   octanoic acid;
   propanoic acid;
   pentanoic acid;
Group II:
   3-methylbutanoic acid;
   2-methylpropanoic acid;
   2-methylbutanoic acid;
   2-phenylacetic acid;
Group III:
   ethyl hexanoate;
   ethyl butanoate;
   δ-decalactone;
   γ-dodecalactone;
   δ-6-dodecen-γ-lactone;
Group IV:
   acetaldehyde;
   2(5)-ethyl-4-hydroxy-5(2)-methyl-3(2H)-furanone;
   4-hydroxy-2,5-dimethyl-3(2H)-furanone;
   phenylacetaldehyde;
   3-methylbutanal;
   3-(methylthio)-propanal;
   methanethiol;
   2,3-butandione;
   3-hydroxy-4,5-dimethyl-2(5H)-furanone;
   2-ethyl-3,5-dimethylpyrazine; and
   2-acetyl-1-pyrroline;
   wherein the weight ratio of the added compounds from group I, compounds from group II, compounds from group III, compounds from group IV, and compounds from group V in the mixture should be at least 200-4950: 0.1-20: 0.4-50: 0.3-30. In additional embodiments, two or more aroma components from each group are combined. Further embodiments comprise three of more aroma components from each group. Other embodiments comprise four or more aroma components from each group. Generally, any number of components from each group may be used so long as the resulting composition falls within the disclosed ratio. In one embodiment, the volatile portion of a Parmesan cheese flavouring embodiment consists only of those aroma compounds listed above in groups I-IV.

In one embodiment, the formulation of a Parmesan cheese flavouring as disclosed above within the disclosed ratio comprises one of more of: between about 1035 mg/kg to about 1265 mg/kg acetic acid, between about 522.9 mg/kg to about 639.1 mg/kg butanoic acid, between about 244.8 mg/kg to about 299.2 mg/kg decanoic acid, between about 118.8 mg/kg to about 145.2 mg/kg hexanoic acid, between about 73.17 mg/kg to about 102.4 mg/kg octanoic acid, between about 57.2 mg/kg to about 69.9 mg/kg propanoic acid, and about 3.8 mg/kg to about 4.6 mg/kg pentanoic acid. Further embodiments may comprise two or more of these volatile components of the above Group I. Other embodiments may comprise three or more of these volatile components in the above Group I. Other embodiments may comprise four or more of the volatiles of Group I. Still further embodiment may comprise five or more of the volatiles of Group I in creating a volatile portion of a Parmesan cheese flavouring. In one embodiment, a volatile portion of a Parmesan cheese flavouring of the present invention comprises five of the volatile components of the above Group I. In one embodiment, a volatile portion of a Parmesan cheese flavouring of the present invention comprises six of the volatile components of the above Group I. Thus, suitable embodiments of the volatile portion of a Parmesan cheese flavouring of the present invention comprise at least one but also up to seven of the volatile aroma components of the above Group I with regard to Parmesan cheese flavours described herein.

In one Parmesan cheese flavouring embodiment, one or more of the following aroma components may be combined in the volatile portion: between about 1.24 mg/kg to about 1.52 mg/kg 3-methylbutanoic acid, between about 1.06 mg/kg to about 1.3 mg/kg 2-methylpropanoic acid, between about 0.665 mg/kg to about 0.777 mg/kg 2-methylbutanoic acid, and between about 0.557 to about 0.681 mg/kg 2-phenyacetic acid. Further embodiments comprise two or more of the aroma components of the above disclosed Group II. One embodiment comprises three of these Group II aroma components. One embodiment comprises all four of these Group II aroma components in the volatile portion of a Parmesan cheese flavouring described herein. Thus, suitable embodiments of the volatile portion of a Parmesan cheese flavouring as disclosed herein comprise at least one but up to four of the components of the above Group II with regard to Parmesan cheese flavours. One skilled in the art having read this disclosure can adjust the amounts of one or more of these components to fall within the disclosed ratio.

In one embodiment, the volatile portion of a Parmesan cheese flavouring comprises one or more of: between about 4.38 mg/kg to about 5.36 mg/kg ethyl hexanoate, between about 1.59 mg/kg to about 1.94 mg/kg ethyl butanoate, between about 2.06 mg/kg to about 2.57 mg/kg δ-decalactone, between about 0.557 mg/kg to about 0.681 mg/kg γ-dodecalactone, and between about 0.422 mg/kg to about 0.516 mg/kg δ-6-dodecen-γ-lactone. Further embodiments comprise two or more of the aroma components of the above disclosed Group III. Other embodiments comprise three or more of these volatile components. In one embodiment, four of the components of Group III are combined within the disclosed ratio. In one embodiment, all five of the components are combined. Thus, suitable embodiments of the volatile portion of a Parmesan cheese flavouring as disclosed herein comprise at least one but up to five of the components of the above Group III with regard to Parmesan cheese flavours. One skilled in the art having read this disclosure can adjust the amounts of one or more of these components to fall within the disclosed ratio.

Suitable embodiments of the present invention further comprise one or more of the following aroma components of Group IV: between about 2.7 mg/kg to about 3.3 mg/kg acetaldehyde, between about 1.23 mg/kg to about 3.9 mg/kg 2(5)-ethyl-4-hydroxy-5(2)-methyl-3(2H)-furanone, between about 1.11 mg/kg to about 1.71 mg/kg 4-hydroxy-2,5-dimethyl-3(2H)-furanone, between about 0.36 mg/kg to about 0.46 mg/kg phenylacetaldehyde, between about 0.16 mg/kg to about 0.2 mg/kg 3-methylbutanal, between about 0.0756 mg/kg to about 0.102 mg/kg 3-(methylthio)-propanal, between about 0.025 mg/kg to about 0.03 mg/kg methanethiol, between about 0.29 mg/kg to about 0.36 mg/kg 2,3-butandione, between about 0.00213 mg/kg to about 0.00337 mg/kg 3-hydroxy-4,5-dimethyl-2(5H)-furanone, between about 0.00131 mg/kg to about 0.00193 mg/kg 2-ethyl-3,5-dimethylpyrazine, and between about 0.000152 mg/kg to about 0.000188 mg/kg 2-acetyl-1-pyrroline. Further embodiments of the volatile portion of a Parmesan cheese flavouring described herein comprise two or more of the volatile components of Group IV. Other embodiments comprise three or more of the volatiles of Group IV. Other embodiments may comprise four or more of the volatile aroma components of the above Group IV. Further embodiments may comprise five or more of these Group IV components. Further embodiments comprise six or more of the Group IV component in manufacturing a Parmesan cheese flavouring. Further embodiments comprise seven or more of these Group IV components. Other embodiments comprise eight or more of these components. Still further embodiments comprise nine or more of these components. One embodiment comprises ten of these compounds of Group IV. Finally, another embodiment comprises all eleven of the compounds of Group IV associated with a Parmesan cheese flavouring of the present invention. Thus, suitable embodiments of the volatile portion of the present invention with regard to a Parmesan cheese flavouring comprise at least one and up to eleven of the components of Group IV. One skilled in the art, having read this disclosure will recognize ways of varying the amounts of any of these components within the disclosed ranges to fit the disclosed ratio. Generally, the more of these aroma components added to the volatile portion of the flavouring, the more authentic the flavouring; that is, the more analogous the resulting manufactured flavouring is to the flavouring produced with longer, more traditional methods. Thus, in one embodiment, all components listed are present in a volatile portion of the present invention.

In further embodiments, one or more of the following aroma volatiles may be further added to produce an acceptable embodiment of a Parmesan cheese flavouring: 1-octen-3-one; dimethyl trisulphide; 2,3,5-trimethylpyrazine; 2-propionyl-1-pyrroline; 2-isopropyl-3-methoxypyrazine; 2,3-diethyl-5-methylpyrazine; 2-(sec-butyl)-3-methoxypyrazine; 2-(sec-butyl)-3-methoxypyrazine; 2-isobutyl-3-methoxypyrazine; (E,Z)-2,6-nonadienal; 3-methyl-2,4-nonandione; heptanoic acid; trans-4,5-epoxy-(E)-2-decenal; 2-methylbutanal; γ-nonalactone; ethyl-2-methylpropanoate; ethyl-2-methylbutanoate; 4-methylphenol; hexanal; 1-hexen-3-one; δ-dodecalactone; ethyl pentanoate; 2-methyl-1-butanol; dodecanoic acid; 3-methyl-1-butanol; octanal; 3-phenylpropanoic acid, 4-hydroxy-3-methoxybenzaldehyde. One skilled in the art, having read this disclosure, will recognize that the amounts of any of the additional aroma volatiles may vary according to one's desired resulting taste. Any small amount of any one compound added may vary the flavouring somewhat while remaining within the scope of the present invention.

By way of example and without intending to limit the scope of the present invention, the following aroma compounds were added during one test run in the following approximate amounts to produce a volatile portion for a suitable Parmesan cheese flavouring. While an embodiment consisting of the following compounds is a suitable embodiment providing an authentic flavouring as described herein, one skilled in the art, armed with this disclosure, would recognize that any number of embodiments is plausible given the disclosure of the present invention.

**Table 11. Sample Volatile Portion of a Parmesan cheese flavouring**

| **Compound** | **Approximate Concentration (mg/kg)** | **Percentage (%)** |
|---|---|---|
| acetic acid | 1150 | 49.61984 |
| butanoic acid | 581 | 25.06880 |
| decanoic acid | 272 | 11.73617 |
| hexanoic acid | 132 | 5.69549 |
| octanoic acid | 93.1 | 4.01705 |
| propanoic acid | 63.6 | 2.74419 |
| ethyl hexanoate | 4.87 | 0.21013 |
| pentanoic acid | 4.23 | 0.18251 |
| acetaldehyde | 3 | 0.12944 |
| 2(5)-ethyl-4-hydroxy-5(2)-methyl-3(2H)-furanone | 2.61 | 0.11262 |
| δ-decalactone | 2.34 | 0.10097 |
| ethyl butanoate | 1.77 | 0.07637 |
| 4-hydroxy-2,5-dimethyl-3(2H)-furanone | 1.39 | 0.05998 |
| 3-methylbutanoic acid | 1.38 | 0.05954 |
| 2-methylpropanoic acid | 1.18 | 0.05091 |
| 2-methylbutanoic acid | 0.739 | 0.03189 |
| 2-phenylacetic acid | 0.619 | 0.02671 |
| γ-dodecalactone | 0.592 | 0.02554 |
| δ-6-dodecen-γ-lactone | 0.469 | 0.02024 |
| phenylacetaldehyde | 0.399 | 0.01722 |
| i 3-methylbutanal | 0.182 | 0.00785 |
| 3-(methylthio)-propanal | 0.0873 | 0.00377 |
| methanethiol | 0.0274 | 0.00118 |
| 2,3-butandione | 0.324 | 0.00140 |
| 3-hydroxy-4,5-dimethyl-2(5H)-furanone | 0.00263 | 0.00011 |
| 2-ethyl-3,5-dimethylpyrazine | 0.00162 | 0.00007 |
| 2-acetyl-1-pyrroline | 0.00017 | 0.00001 |

These compounds are readily available from any number of manufacturers or alternatively, may be prepared by any means known in the art. Separate from or concurrent with the preparation of the volatile portion for the Parmesan cheese as described above, in one embodiment, a matrix simulating the Parmesan cheese taste is created. During test runs, two different matrixes were prepared; the first based on a protein matrix (3 grams water, 52 grams sunflower oil and 45 grams protein matrix) and the second from just water and oil homogenized by shaking (28 grams water and 72 grams sunflower oil. In a first embodiment imitating Parmesan cheese, the aroma portion can be combined with an odor free protein matrix prepared from Mozzarella cheese to simulate the matrix. Generally, this matrix is prepared by first freeze-drying the Mozzarella cheese and then grinding it, followed by a Soxhlet extraction with diethyl ether for 24 hours, dichloromethane for 24 hours and pentane for 5 hours and a washing step with methanol (2 times) and then water (3 times). The protein matrix can then be freeze-dried and ground. In a second embodiment, the matrix is prepared as an emulsion in water and oil and homogenized by shaking. During test runs, 100 grams were prepared using a ratio of water to sunflower oil of about 28:72. Following dissolving steps, missing amounts of pure sunflower oil and water as well as an approximate amount of methanethiol, as indicated above, were added.

While most of the compounds are soluble in oil and therefore dissolved in sunflower oil, 2-phenylacetic acid and 4-hydroxy-2,5-dimehtyl-3(2H)-furanone are dissolved in water, as they are not soluble in oil. In addition, methanethiol is added via a gas tight syringe. Thus, the oil soluble volatiles are dissolved in oil in the approximate amounts or percentages indicated. Next, the indicated amounts and/or percentages of the water soluble volatiles are dissolved in water, followed by homogenizing the water-oil mixture, and finally, adding methanethiol using a gas tight syringe. The applicants found that ethyl hexanoate and ethyl butanoate actually contribute better to a flavouring composition at higher amounts than previously suggested in the art, with concentrations exceeding by factors of 2 and 1.5, respectively, to produce a flavouring more characteristic of a Parmesan cheese.

In one embodiment, once both the volatile portion and a suitable matrix are obtained in one embodiment, the two are combined to create a flavouring composition having a flavour profile similar to that of Parmesan cheese. It should be understood that the order of preparing the matrix and/or aroma portion is not critical and they can be created simultaneously or separately. In one embodiment, the aroma volatile portion is combined with a non-volatile portion, further discussed below. While the flavour profile of a Parmesan cheese flavouring is extremely complex and contains hundreds of compounds, the compositions of the present invention, as previously discussed, are capable of imparting a similar flavour profile using as little as 26 aroma compounds.

Following preparation of a volatile aroma portion, the method of the present invention for the preparation of a Parmesan cheese flavouring closely imitating the cheese produced using traditional methods further comprises the step of combining the volatile portion with a non-volatile portion, wherein said non-volatile portion is comprised of one or more non-volatile components. In one embodiment, the non-volatile portion is comprised of one or more components from each of the following groups. In another embodiment, the non-volatile portion consists only of amino acids, organic acids, free fatty acids, and glutamyl peptides components from the following list. Again, it should be noted that the order of preparation is not critical and the non-volatile portion may be prepared first or simultaneous with the volatile portion.
Group I:
   a) glycine;
   b) alanine;
   c) serine;
   d) proline;
   e) valine;
   f) threonine;
   g) isoleucine;
   h) asparagine;
   i) aspartic acid;
   j) glutamine;
   k) lysine;
   l) glutamic acid;
   m) methionine;
   n) histidine;
   o) phenylalanine;
   p) arginine;
   q) tyrosine;
   r) tryptophane;
Group II:
   a) sodium;
   b) potassium;
   c) magnesium;
   d) calcium;
   e) chloride;
   f) phosphate;
Group III:
   a) citric acid;
   b) lactic acid;
   c) acetic acid;
Group IV:
   a) histamine;
   b) tyramine;
Group V:
   a) butyric acid;
   b) caproioc acid;
   c) capric acid;
   d) lauric acid;
   e) myristic acid;
   f) palmic acid;
   g) stearic acid;
   h) oleic acid;
Group VI:
   a) α-Glu-Gly;
   b) α-Glu-Val;
   c) γ-Glu-Val;
   d) α-Glu-Ala;
   e) γ-Glu-Ala;
   f) γ-Glu-Tyr;
   g) α-Glu-Glu;
   h) γ-Glu-Glu;
   i) α-Glu-Lys;
   j) γ-Glu-Lys;
   k) α-Glu-Asp;
   l) γ-Glu-Asp;
   m) α-Glu-Thr;
   n) γ-Glu-Thr;
   o) α-Glu-Trp;
   p) γ- Glu-Trp;
   q) γ-Glu-His;
   r) γ-Glu-Phe;
   s) γ-Glu-Met;
   t) γ-Glu-Leu; and
   u) γ-Glu-Gln;
   wherein the weight ratio of each of the one or more compounds selected from each groups is 5-900: 1-150:0.1-15:0.01-2:0.1-50:0.1-50.

In one embodiment, one or more of the following amino acids from Group I is combined: from between about 3.1 to about 4.3 g/kg glycine, between about 3.2 to about 4.6 g/kg alanine, between about 7.1 to about 10.5 g/kg serine, between about 11.4 to about 16.04 g/kg proline, between 8.0 to about 11.3 g/kg valine, between about 2.9 to about 5 g/kg threonine, between about 8.2 to about 11.2 g/kg isoleucine, between about 9.7 to about 13.8 g/kg leucine, between about 3.78 to about 5.21 g/kg asparagine, between about 3.9 to about 7.01 g/kg aspartic acid, from about 0.75 to about 1.2 g/kg glutamine, between about 13.5 to about 15.5 g/kg lysine, between about 20.02 to about 25.8 g/kg glutamic acid, between about 2.6 to about 3.7 g/kg methionine, from about 2.60 to about 3.73 g/kg histidine, from about 0.07 to about 0.1 g/kg phenylalanine, from about 1.9 to about 4.75 g/kg arginine, between about 1.5 to about 2.3 g/kg tyrosine and between about 0.67 to about 0.91 g/kg tryptophane. Glycine, alanine, serine, proline and methionine provide for sweet tastes, while valine, isoleucine, leucine, lysine, histidine, phenylalanine, arginine, tyrosine and tryptophane provide for bitter tastes and asparagine, aspartic acid and glutamic acid provide for umami tastes to the cheese embodiments. In further embodiments, at least two of these amino acids are added to the non-volatile portion of a Parmesan cheese flavouring. In further embodiments, at least three of these amino acids of Group I are added. Further embodiments of the non-volatile portion comprise at least four of these amino acids. In some embodiments, at least five of these amino acids are combined within the non-volatile portion. In other embodiments, at least six of these amino acids are combined within the non-volatile portion. Further embodiments comprise at least seven of these amino acids to the non-volatile portion of a Parmesan cheese flavouring. Other embodiments of the non-volatile portion comprise at least eight of these amino acids for further Parmesan cheese flavouring embodiments. Some embodiments of the non-volatile portion comprise at least nine of these amino acids. In other embodiments, at least ten of these amino acids are combined within the non-volatile portion of Parmesan cheese flavouring embodiments. Further embodiments comprise at least eleven of these amino acids to the non-volatile portion of a Parmesan cheese flavouring. Other embodiments comprise at least twelve of the amino acids. Still further embodiments may comprise at least thirteen of the amino acids. Other embodiments may comprise at least fourteen of the amino acids. In some embodiments, at least fifteen amino acids are combined. In some embodiments, at least sixteen amino acids are combined within the non-volatile portion. In further embodiments, at least seventeen amino acids are selected for addition to make-up the non-volatile portion. Other embodiments may comprise eighteen of the amino acids in the non-volatile portion. In one embodiment, all nineteen of the amino acids of group I are present. Consequently, suitable embodiments of the non-volatile portion comprise at least one but up to nineteen of the amino acids, so long as the above disclosed ratio with the other components is met. It should be noted that the amount added of each will mimic different aged cheeses. Thus, one skilled in the art, armed with this disclosure would recognize that variances in these amounts would provide a number of embodiments. It is believed that by varying the amounts within the disclosed ratio, more refined and authentic Parmesan cheese embodiments are manufactured. It should be noted that the higher end of the ranges of the amounts provided do not necessarily result in a more aged embodiment. By way of example, the following table illustrates approximate amounts of Group I added in a non-volatile portion.

**Table 12. Sample embodiment of Group I mimicking varying aged cheeses.**

| **Non-volatile component** | **13 month** | **24 month** | **30 month** |
|---|---|---|---|
| Glycine (g/kg) | 3.54 | 3.88 | 3.79 |
| Alanine(g/kg) | 3.87 | 4.18 | 3.63 |
| Serine(g/kg) | 8.90 | 9.51 | 7.84 |
| Proline(g/kg) | 14.03 | 14.58 | 12.76 |
| Valine(g/kg) | 10.01 | 10.24 | 8.97 |
| Threonine(g/kg) | 4.52 | 4.65 | 2.96 |
| Isoleucine(g/kg) | 10.21 | 10.03 | 9.14 |
| Leucine(g/kg) | 12.50 | 11.57 | 10.87 |
| Asparagine(g/kg) | 4.29 | 4.20 | 4.74 |
| Aspartic acid(g/kg) | 6.08 | 6.45 | 4.37 |
| Glutamine (g/kg) | 1.06 | 0.87 | 1.05 |
| Lysine(g/kg) | 15.07 | 15.13 | 13.59 |
| Glutamic acid(g/kg) | 23.48 | 22.45 | 22.25 |
| Methionine(g/kg) | 3.27 | 3.37 | 2.93 |
| Histidine(g/kg) | 3.38 | 3.37 | 2.90 |
| Phenylalanine(g/kg) | 0.09 | 0.09 | 0.08 |
| Arginine(g/kg) | 2.50 | 4.31 | 2.22 |
| Tyrosine(g/kg) | 2.10 | 1.66 | 1.75 |
| Tryptophane(g/kg) | 0.83 | 0.78 | 0.75 |

In addition to one or more of the disclosed amino acids of Group I, one or more of the following cations and anions is added: from between about 4.86 g/kg to about 7.01 g/kg sodium, between about 0.74 to about 0.96 g/kg potassium, between about 0.25 to about 0.4 g/kg magnesium, between about 4.9 g/kg to about 7.18 g/kg calcium, from between about 3.30 to about 4.64 g/kg chloride, and between about 0.8 to about 1.01 g/kg phosphate. One skilled in the art, having read this disclosure would recognize that any combination of these cations and anions may provide for suitable embodiments. So long as the amounts are added to fall within the disclosed ratio, suitable embodiments of the present would be produced. While sodium, chloride and phosphate provide for salty tastes, magnesium and calcium provide for a desirable astringent or bitter taste and potassium provides for a salty or astringent taste. Other substitutions providing for similar tastes may be substituted accordingly. It should be noted that the ranges provided herein may vary according to the desired taste and increased amounts do not necessarily provided for more aged embodiments. By way of example, Table 13 illustrates sample embodiments of the aged embodiments, as found by Applicants.

**Table 13. Sample embodiments of Group II mimicking varying aged cheeses.**

| **Non-volatile component** | **13 month** | **24 month** | **30 month** |
|---|---|---|---|
| Sodium(g/kg) | 5.47 | 5.62 | 6.42 |
| Potassium(g/kg) | 0.82 | 1.11 | 0.87 |
| Magnesium(g/kg) | 0.25 | 0.36 | 0.29 |
| Calcium(g/kg) | 5.45 | 6.53 | 5.77 |
| Chloride(g/kg) | 3.81 | 3.70 | 4.22 |
| Phosphate(g/kg) | 1.12 | 0.92 | 1.12 |

In addition to the one or more compounds selected from groups I and II, one or more of the following organic acids from group III is added to provide for a sour taste: between about 54.34 mg/kg to about 66.420 mg/kg citric acid, about 1437.12 mg/kg to about 1756.48 mg/kg lactic acid, and/between about 194.7 mg/kg to about 237.9 mg/kg acetic acid. In addition to one or more compounds of groups I and II, one or both of the compounds of group IV is added. That is, between about 117.05 mg/kg to about 143.06 mg/kg histamine may be added to provide for what could be described as a burning taste to round out the Parmesan cheese flavouring. Alternatively, about 66.7 to about 81.5 mg/kg tyramine may be added to produce a burning taste to round out flavouring embodiments. In another embodiment, both biogenic amines from group IV are combined within the disclosed ratio to manufacture Parmesan cheese flavourings as described herein. It should be noted that the higher end of the ranges of the amounts provided do not necessarily result in a more aged embodiment. By way of example, the following tables illustrate amounts of components from group III and IV that were added during test runs.

**Table 14. Sample embodiments of group III mimicking cheeses aged 24 months.**

| **Non-volatile component** | **24 month** |
|---|---|
| citric acid (mg/kg) | 60.38 |
| Lactic acid (mg/kg) | 1596.80 |
| Acetic acid (mg/kg) | 216.28 |

**Table 15. Sample embodiments of group IV cheeses aged 24 months.**

| **Non-volatile component** | **24 month** |
|---|---|
| Histamine (mg/kg) | 130.05 |
| Tyramine(mg/kg) | 74.11 |

In addition to one or more non-volatile components from each of groups I, II, III and IV, one or more free fatty acids of group V are added to the non-volatile portion. In suitable embodiments, one or more of the following is added: between about 78.4 mg/kg to about 484.7 mg/kg butyric acid, between about 41.58 mg/kg to about 264.6 mg/kg caproic acid, between about 42.84 mg/kg to about 222.86 mg/kg caprylic acid, between about 65.25 mg/kg to about 363.22 capric acid, between about 50.3 mg/kg to about 245.85 mg/kg lauric acid, between about 182.34 mg/kg to about 962.72 mg/kg myristic acid, between about463.41 mg/kg to about 2418.68 mg/kg palmic acid, between about 126.18 mg/kg to about 889.02 mg/kg stearic acid, and between about 782.6 mg/kg to about 2003.21 mg/kg oleic acid. In some embodiments for the creation of a Parmesan cheese flavouring having a flavour associated with cheese aged for about 13 months, one or more of: between about 78.4 mg/kg to about 95.8 mg/kg butyric acid, about 41.58 mg/kg to about 50.8 mg/kg caproic acid, between about 42.84 mg/kg to about 52.36 mg/kg caprylic acid, between about 65.25 mg/kg to about 79.75 mg/kg capric acid, between about 50.3 mg/kg to about 61.49 mg/kg lauric acid, between about 182.34 mg/kg to about 222.9 mg/kg myristic acid, between about 463.4 mg/kg to about 566.39 mg/kg palmic acid, between about 126.18 mg/kg to about 154.22 mg/kg stearic acid and between about 782.61 mg/kg to about 2003.21 mg/kg oleic acid may be added to the non-volatile portion of a Parmesan cheese embodiment. In other embodiments mimicking 24 and 30 month-aged embodiments, the non-volatile portion of a Parmesan cheese flavouring may be comprised of one or more of: between about 367.8 to about 484.7 mg/kg butyric acid, between about 189.7 to about 264.6 mg/kg caproic acid, about 160.47 mg/kg to about 222.86 caprylic acid, beween about 266.67 mg/kg to about 245.85 m/kg lauric acid, between about 769.59 mg/kg to about 962.72 mg/kg myristic acid, from about 1888.38 mg/kg to about 2418.68 mg/kg palmic acid, between about 412.47 mg/kg to about 889.02 mg/kg stearic acid and between about 1226.34 mg/kg to about 2003.21 mg/kg oleic acid. One skilled in the art, armed with this disclosure would recognize that multiple embodiments are possible. In light of the table provide below, one skilled in the art will also recognize that increasing variances in amounts do not necessarily provide for more aged embodiments. In some case, after a component hits the 24 month aged embodiments, some embodiments tend to decline in the concentration levels of each compound. This will be seen as futher discussed below. In further embodiments, two or more of the free fatty acids of group V are included. In other embodiments, three or more free fatty acids may be used. Other embodiments comprise four or more of the free fatty acids of group V. Some embodiments comprise five or more of the group V components. Further embodiments comprise of six or more of the group V components. In still further embodiments, seven or more of the components are selected from group V. In one embodiment, eight components are selected from group V for incorporation into the non-volatile portion. In another embodiment, all nine components are selected. Thus, suitable embodiments may comprise anywhere from one up to nine free fatty acids of group V, so long as the limitations of the ratio provided are met. It should be noted that the higher end ranges of the amounts provided do not necessarily result in a more aged embodiment.

In further embodiments mimicking a Parmesan cheese aged about 13 months, one or more of: between about 78.39 to about 95.81 mg/kg butyric acid, between about 41.58 to about 50.8 mg/kg caproic acid, between about 42.8 to about 52.3 mg/kg caprylic acid for a puckering or astringent taste sensation, about 64.95 to about 79.75 mg/kg capric acid for a puckering taste sensation, about 782.6 to about 956.6 mg/kg oleic acid is added for what can be described as a fatty taste sensation. In another embodiment mimicking a 13 month aged cheese, the non-volatile portion may further comprise one or more of between about 50.3 to about 61.5 mg/kg lauric acid, between about 162.08 mg/kg to about 182.34 mg/kg myristic acid, between about 463.41 mg/kg to about 566.39 mg/kg palmic acid, and between about 126.18 to about 155.22 mg/kg stearic acid.

For more aged flavouring embodiments of 24 to 30 months, one or more of the following is added for mimicking Parmesan cheese flavouring: between about 367.83 to about 484.66 mg/kg butyric acid, between about 189.7 mg/kg to about 264.55 mg/kg caproic acid, 160.4 to about 222.86 mg/kg caprylic acid, between about 185.8 to about 245.8 mg/kg lauric acid, between about 769.6 to about 962.7 mg/kg myristic acid, between about 1888.3 to about 2418.7 mg/kg palmic acid, between about 412.47 to about 889.02 mg/kg stearic acid, and between about 1226.34 to about 2003.2 mg/kg oleic acid. In preferred embodiments, embodiments comprising between about 412.47 to about 504.13 mg/kg stearic are more representative of a cheesed aged 24 months, while embodiments comprising between about 727.4 to about 889.02 mg/kg stearic acid are more representative of a cheese aged 30 months. By way of example, the following table illustrates amounts of components from group V that were added during test runs.

**Table 16. Sample embodiments of group V mimicking varying aged cheeses.**

| **Non-volatile component** | **13 month** | **24 month** | **30 month** |
|---|---|---|---|
| Butyric acid (mg/kg) | 87.1 | 408.7 | 440.6 |
| Caproic acid (mg/kg) | 46.2 | 210.8 | 240.5 |
| Caprylic acid(mg/kg) | 47.6 | 178.3 | 202.6 |
| Capric acid(mg/kg) | 72.5 | 296.3 | 330.2 |
| Lauric acid(mg/kg) | 55.9 | 206.5 | 223.5 |
| Myristic acid(mg/kg) | 202.6 | 855.1 | 875.2 |
| Palmic acid(mg/kg) | 514.9 | 2198.8 | 2098.2 |
| Stearic acid(mg/kg) | 140.2 | 458.3 | 808.2 |
| Oleic acid(mg/kg) | 869.6 | 1821.1 | 1362.6 |

In addition to one or more component from the above groups I-V, one or more glutamyl peptides from group VI is added to mimic a flavouring characteristic of Parmesan cheese of varying ages. In one embodiment, one or more of: between about 1.83 mg/kg to about 5.96 mg/kg αGlu-Gly, between about 74.18 to about 233.99 mg/kg γGlu-Gly, between about 3.2 to about 8.79 mg/kg αGlu-Val, between about 74.5 to about 347.65 mg/kg yGlu-Val, between about 0.86 to about 1.98 αGlu-Ala, between about 15.06 mg/kg to 50.81 mg/kg γGlu-Ala, between about 37.67 to about 62.4 mg/kg γ-Glu-Tyr, between about 11.09 to about 39.1 mg/kg αGlu-Glu, between about 287.1 to about 999.2 mg/kg γGlu-Glu, between about 14.45 to about 54.22 mg/kg αGlu-Lys, between about 65.56 to about 348.05 γGlu-Lys, between about 1.6 to about 3.59 mg/kg α-Glu-Asp, between about 15.8 to about 77.95 γGlu-Asp, between about 2.67 to about 9.54 mg/kg αGlu-Thr, between about 157.8 to about 693.06 mg/kg γGlu-Thr, between about 0.48 to about 0.99 mg/kg α Glu-Trp, between about 5.36 to about 21.98 γ Glu-Trp, between about 494.6 to about 1907.65 mg/kg γGlu-His, between about 95.9 to about 371.08 mg/kg γGlu-Phe, between about 79.2 to about 190.6 mg/kg γGlu-Met, between about 239.9 to about 426.2 mg/kg γGlu-Leu, and between about 18.2 to about 45.05 mg/kg γGlu-Gln. In some embodiments, the non-volatile portion of a Parmesan cheese flavouring comprises at least two of these glutamyl-peptides. In some embodiments, the non-volatile portion of a Parmesan cheese flavouring comprises at least three of these glutamyl-peptides. Some embodiments of the non-volatile portion comprise at least four of these glutamyl-peptides listed under group VI. Other embodiments of the non-volatile portion comprise at least five of these group VI glutamyl-peptides. Other embodiments of the non-volatile portion comprise at least six of these glutamyl-peptides. In some embodiments, the non-volatile portion comprises at least six of these glutamyl-peptides from group VI. Other embodiments comprise at least seven of the glutamyl peptides of group VI associated with the Parmesan cheese flavourings described herein. Further embodiments comprise at least eight of the glutamyl peptides of group VI. In some embodiments, the non-volatile portion is comprised of at least nine of the group VI glutamyl peptides. Other embodiments comprise at least nine of the group VI glutamyl peptides. Still further embodiments comprise at least ten of the glutamyl peptides of the listed group VI. In some embodiments, at least eleven of the glutamyl peptides are selected for combination in the non-volatile portion. In other embodiments, at least twelve of the group VI glutamyl peptides are selected. In some embodiments, at least thirteen of the glutamyl peptides are selected. At least fourteen glutamyl peptides are selected for combination within the non-volatile portion in further embodiments. Still further embodiments comprising at least fifteen glutamyl peptides of group VI are possible so long as the disclosed ratio is met. Moreover, embodiments comprising at least sixteen group VI glutamyl peptides are also possible so long as the amounts fall within the above-disclosed ratio. In some embodiments, the non-volatile portion of Parmesan cheese flavourings described herein may comprise at least seventeen of the group VI glutamyl peptides. In some embodiments, the non-volatile portion of Parmesan cheese flavourings described herein may comprise at least eighteen of the group VI glutamyl peptides. In other embodiments, the non-volatile portion of Parmesan cheese flavourings described herein may comprise at least nineteen of the group VI glutamyl peptides. Finally, in one embodiment, a non-volatile portion of Parmesan cheese flavourings described herein comprises all twenty of the group VI glutamyl peptides. Thus, suitable embodiments comprise at least one but up to twenty of the group VI glutamyl peptides. Generally, the more components present, the more authentic the flavouring, it being difficult to distinguish from one produced using traditional long aging methods. However, similar embodiments are also possible in other amounts so long as the ratio disclosed above is met. It should be noted that the higher end ranges of the approximate amounts do not necessarily result in a more aged embodiment. By way of example, the following table illustrates approximate amounts of components from group VI added during test runs.

**Table 17. Sample embodiments of group VI mimicking varying aged cheeses.**

| **Non-volatile component (mg/kg)** | **13 month** | **24 month** | **30 month** |
|---|---|---|---|
| α-Glu-Gly | 2.2-2.7 | 4.89-5.96 | 3.63-4.44 |
| γ-Glu-Gly | 74.18-90.67 | 191.44-233.99 | 140.91-172.23 |
| α-Glu-Val | 3.20-3.92 | 7.19-8.79 | 5.75-7.03 |
| γ-Glu-Val | 74.50-91.11 | 284.44-347.65 | 190.0-232.23 |
| α-Glu-Ala | 0.86-1.06 | 1.62-1.98 | 1.41-1.73 |
| γ-Glu-Ala | 15.06-18.4 | 41.57-50.81 | 34.64-42.34 |
| γ-Glu-Tyr | 37.67-46.04 | 55.1-62.4 | 45.80-56.00 |
| α-Glu-Glu | 11.07-13.53 | 31.90-39.10 | 19.2-23.58 |
| γ-Glu-Glu | 287.1-350.9 | 815.9-999.2 | 581.2-710.4 |
| α-Glu-Lys | 15.3-18.81 | 43.2-52.9 | 18.99-23.21 |
| γ-Glu-Lys | 65.56-80.12 | 284.77-348.05 | 172.92-211.34 |
| α-Glu-Asp | 2.93-3.59 | 2.48-3.04 | 1.60-1.96 |
| γ-Glu-Asp | 16.02-19.66 | 63.78-77.95 | 41.60-50.86 |
| α-Glu-Thr | 2.84-3.48 | 7.80-9.54 | 6.07-7.41 |
| γ-Glu-Thr | 157.8-192.9 | 567.05-693.06 | 376.18-459.78 |
| α-Glu-Trp | 0.531-0.649 | 0.73-0.89 | 0.55-0.67 |
| γ-Glu-Trp | 5.36-6.54 | 17.99-21.98 | 11.36-13.88 |
| γ-Glu-His | 494.6-604.5 | 1560.8-1907.65 | 1113.97-1361.52 |
| γ-Glu-Phe | 95.9-117.3 | 303.69-371.18 | 202.62-247.65 |
| γ-Glu-Met | 79.2-96.8 | 155.9-190.6 | 107.83-131.79 |
| γ-Glu-Leu | 239.97-293.30 | 348.68-426.16 | 269.1-328.9 |
| γ-Glu-Gln | 40.54-49.55 | 37.56-45.90 | 18.20-22.24 |

In one embodiment, the method comprises adding the following taste active compounds to the aroma portion within the disclosed ratio for each group as earlier provided to produce authentic Parmesan cheese flavouring embodiments: alanine, serine, proline, isoleucine, aspartic acid, glutamic acid, methionine, tyrosine, sodium, calcium, chloride, lactic acid, acetic acid, histamine, butyric acid, caproic acid. In addition, one or more of the following glutamyl peptides should be incorporated within the above concentrations: γ-Glu-Glu, γ-Glu-His, γ-Glu-Met, γ-Glu-Leu, and γ-Glu-Gln. In further embodiments, any of the above disclosed non-volatile compounds found to characterize the flavourings are added to further develop the flavouring of a Parmesan cheese.

Having prepared a non-volatile portion or mixture of non-volatiles that best characterize a desired Parmesan cheese flavouring embodiment, in one embodiment, the non-volatile portion may be combined with the aroma volatile portion to create a flavouring closely imitating a desired Parmesan cheese flavouring. Optionally, the prepared flavouring may further be combined with suitable carriers. In one embodiment of the Parmesan cheese aspect, the above compounds are combined with one or more liquid flavour carriers such as vegetable oil, medium chain triglycerides, propylene glycol, ethanol, and/or glycerin for addition to foods. Liquid carriers such as vegetable oil and/or medium chain triglyceride are suitable to use for a topical spray onto snack foods including, without limitation, potato chips, crackers, wafers, pretzels, or vegetables.

In another embodiment, the above compounds (either with or without the addition of liquid flavor carriers) can be incorporated with dry materials such as salt, sugar, polysaccharides, proteins, maltodextrin, anti-caking agents, and/or acidulants through methods such as spray drying, plating, and/or mixing to create a dry flavouring. The dry flavouring is then suitable to be applied onto snack foods such as potato chips. In further embodiments, further compounds may be added to the above compositions to further differentiate the vinegar flavorings. The compositions according to the present invention may be added to foodstuffs at any level of intensity or strength desired, depending on the strength of the flavour desired. The flavouring compositions of the present invention can be applied to a food product as a topical seasoning or as an inclusion in the food ingredients as the food is being prepared to deliver flavor, taste, seasoning or aroma to a food product. Moreover, the flavouring compositions of the present invention may be created in as little as one day. It should be noted that any of the above disclosed components may be substituted for another derivative or similar components in which the same basic effect, aroma or taste is provided without departing from the scope and spirit of the present invention.

## Claims

1. A method for making a flavouring composition comprising the steps of:
I) combining one or more volatile aroma compounds from each of the following groups:
Group I:
a) acetic acid;
b) butanoic acid;
c) decanoic acid;
d) hexanoic acid;
e) octanoic acid;
f) propanoic acid;
g) pentanoic acid;
Group II:
a) 3-methylbutanoic acid;
b) 2-methylpropanoic acid;
c) 2-methylbutanoic acid;
d) 2-phenylacetic acid;
Group III:
a) ethyl hexanoate;
b) ethyl butanoate;
c) δ-decalactone;
d) γ-dodecalactone;
e) δ-6-dodecen-γ-lactone;
Group IV:
a) acetaldehyde;
b) 2(5)-ethyl-4-hydroxy-5(2)-methyl-3(2H)-furanone;
c) 4-hydroxy-2,5-dimethyl-3(2H)-furanone;
d) phenylacetaldehyde;
e) 3-methylbutanal;
f) 3-(methylthio)-propanal;
g) methanethiol;
h) 2,3-butandione;
i) 3-hydroxy-4,5-dimethyl-2(5H)-furanone;
j) 2-ethyl-3,5-dimethylpyrazine; and
k) 2-acetyl-1-pyrroline;
wherein the weight ratio of the added compounds from group I, compounds from group II, compounds from group III, and compounds from group IV in the mixture should be at least 200-4950: 0.1-20: 0.4-50: 0.3-30; thereby producing a volatile portion.

2. The method of claim 1 further comprising the step of combining said volatile portion with a non-volatile portion comprised of one or more non-volatile components, wherein said non-volatile components are characteristic of a Parmesan cheese flavouring.

3. The method of claim 1 wherein said volatile portion is comprised of one or more of: between about 1035 mg/kg to about 1265 mg/kg acetic acid, between about 522.9 mg/kg to about 639.1 mg/kg butanoic acid, between about 244.8 mg/kg to about 299.2 mg/kg decanoic acid, between about 118.8 mg/kg to about 145.2 mg/kg hexanoic acid, between about 73.17 mg/kg to about 102.4 mg/kg octanoic acid, between about 57.2 mg/kg to about 69.9 mg/kg propanoic acid, and about 3.8 mg/kg to about 4.6 mg/kg pentanoic acid.

4. The method of claim 1 wherein said volatile portion is comprised of one or more of: between about 1.24 mg/kg to about 1.52 mg/kg 3-methylbutanoic acid, between about 1.06 mg/kg to about 1.3 mg/kg 2-methylpropanoic acid, between about 0.665 mg/kg to about 0.777 mg/kg 2-methylbutanoic acid, and between about 0.557 to about 0.681 mg/kg 2-phenyacetic acid.

5. The method of claim 1 wherein said volatile portion is comprised of one or more of: between about 4.38 mg/kg to about 5.36 mg/kg ethyl hexanoate, between about 1.59 mg/kg to about 1.94 mg/kg ethyl butanoate, between about 2.06 mg/kg to about 2.57 mg/kg δ-decalactone, between about 0.557 mg/kg to about 0.681 mg/kg γ-dodecalactone, and between about 0.422 mg/kg to about 0.516 mg/kg δ-6-dodecen-γ-lactone.

6. The method of claim 1 wherein said volatile portion is comprised of one or more of: between about 2.7 mg/kg to about 3.3 mg/kg acetaldehyde, between about 1.23 mg/kg to about 3.9 mg/kg 2(5)-ethyl-4-hydroxy-5(2)-methyl-3(2H)-furanone, between about 1.11mg/kg to about 1.71 mg/kg 4-hydroxy-2,5-dimethyl-3(2H)-furanone, between about 0.36 mg/kg to about 0.46 mg/kg phenylacetaldehyde, between about 0.16 mg/kg to about 0.2 mg/kg 3-methylbutanal, between about 0.0756 mg/kg to about 0.102 mg/kg 3-(methylthio)-propanal, between about 0.025 mg/kg to about 0.03 mg/kg methanethiol, between about 0.29 mg/kg to about 0.36 mg/kg 2,3-butandione, between about 0.00213 mg/kg to about 0.00337 mg/kg 3-hydroxy-4,5-dimethyl-2(5H)-furanone, between about 0.00131 mg/kg to about 0.00193 mg/kg 2-ethyl-3,5-dimethylpyrazine, and between about 0.000152 mg/kg to about 0.000188 mg/kg 2-acetyl-1-pyrroline.

7. The method of claim 2 wherein said non-volatile portion is comprised of one or more non-volatile components from each of the following groups:
Group I:
a) glycine;
b) alanine;
c) serine;
d) proline;
e) valine;
f) threonine;
g) isoleucine;
h) asparagine;
i) aspartic acid;
j) glutamine;
k) lysine;
l) glutamic acid;
m) methionine;
n) histidine;
o) phenylalanine;
p) arginine;
q) tyrosine;
r) tryptophane;
Group II:
a) sodium;
b) potassium;
c) magnesium;
d) calcium;
e) chloride;
f) phosphate;
Group III:
a) citric acid;
b) lactic acid;
c) acetic acid;
Group IV:
a) histamine;
b) tyramine;
Group V:
a) butyric acid;
b) caproioc acid;
c) capric acid;
d) lauric acid;
e) myristic acid;
f) palmic acid;
g) stearic acid;
h) oleic acid;
Group VI:
a) α-Glu-Gly;
b) α-Glu-Val;
c) γ-Glu-Val;
d) α-Glu-Ala;
e) γ-Glu-Ala;
f) γ-Glu-Tyr;
g) α-Glu-Glu;
h) γ-Glu-Glu;
i) α-Glu-Lys;
j) γ-Glu-Lys;
k) α-Glu-Asp;
l) γ-Glu-Asp;
m) α-Glu-Thr;
n) γ-Glu-Thr;
o) α-Glu-Trp;
p) γ- Glu-Trp;
q) γ-Glu-His;
r) γ-Glu-Phe;
s) γ-Glu-Met;
t) γ-Glu-Leu; and
u) γ-Glu-Gln;
wherein the weight ratio of each of the one or more compounds selected from each groups is 5-900: 1-150:0.1-15:0.01-2:0.1-50:0.1-50.

8. The method of claim 2 wherein said non-volatile portion comprises one or more of: between about 3.1 to about 4.3 g/kg glycine, between about 3.2 to about 4.6 g/kg alanine, between about 7.1 to about 10.5 g/kg serine, between about 11.4 to about 16.04 g/kg proline, between 8.0 to about 11.3 g/kg valine, between about 2.9 to about 5 g/kg threonine, between about 8.2 to about 11.2 g/kg isoleucine, between about 9.7 to about 13.8 g/kg leucine, between about 3.78 to about 5.21 g/kg asparagine, between about 3.9 to about 7.01 g/kg aspartic acid, from about 0.75 to about 1.2 g/kg glutamine, between about 13.5 to about 15.5 g/kg lysine, between about 20.02 to about 25.8 g/kg glutamic acid, between about 2.6 to about 3.7 g/kg methionine, from about 2.60 to about 3.73 g/kg histidine, f rom about 0.07 to about 0.1 g/kg phenylalanine, from about 1.9 to about 4.75 g/kg arginine, between about 1.5 to about 2.3 g/kg tyrosine and between about 0.67 to about 0.91 g/kg tryptophane

9. The method of claim 2 wherein said non-volatile portion comprises one or more of: between about 4.86 g/kg to about 7.01 g/kg sodium, between about 0.74 to about 0.96 g/kg potassium, between about 0.25 to about 0.4 g/kg magnesium, between about 4.9 g/kg to about 7.18 g/kg calcium, from between about 3.30 to about 4.64 g/kg chloride, and between about 0.8 to about 1.01 g/kg phosphate.

10. The method of claim 2 wherein said non-volatile portion comprises one or more of: between about 54.34 mg/kg to about 66.420 mg/kg citric acid, about 1437.12 mg/kg to about 1756.48 mg/kg lactic acid, and/between about 194.7 mg/kg to about 237.9 mg/kg acetic acid.

11. The method of claim 2 wherein said non-volatile portion comprises one or more of: between about 117.05 mg/kg to about 143.06 mg/kg histamine and about 66.7 to about 81.5 mg/kg tyramine.

12. The method of claim 2 wherein said non-volatile portion comprises one or more of: between about 78.4 mg/kg to about 484.7 mg/kg butyric acid, between about 41.58 mg/kg to about 264.6 mg/kg caproic acid, between about 42.84 mg/kg to about 222.86 mg/kg caprylic acid, between about 65.25 mg/kg to about 363.22 capric acid, between about 50.3 mg/kg to about 245.85 mg/kg lauric acid, between about 182.34 mg/kg to about 962.72 mg/kg myristic acid, between about463.41 mg/kg to about 2418.68 mg/kg palmic acid, between about 126.18 mg/kg to about 889.02 mg/kg stearic acid, and between about 782.6 mg/kg to about 2003.21 mg/kg oleic acid.

13. The method of claim 2 wherein said non-volatile portion comprises one or more of: between about 11.09 to about 39.1 mg/kg αGlu-Glu, between about 287.1 to about 999.2 mg/kg γ-Glu-Glu, between about 494.6 to about 1907.65 mg/kg γ-Glu-His, between about 79.2 to about 190.6 mg/kg γ-Glu-Met, between about 239.9 to about 426.2 mg/kg γ-Glu-Leu, and between about 18.2 to about 45.05 mg/kg γ-Glu-Gln.

14. The method of claim 2 further comprising the step of adding said Parmesan cheese flavouring to a liquid carrier matrix or further comprising addition of said Parmesan cheese flavouring to a chip.

15. The flavouring created by the method of claim 1.
